# FASCICULE DE BREVET EUROPEEN

(11) **EP 2 516 248 B1**
(45) Date de publication et mention de la délivrance du brevet: **21.10.2015**
(21) Numéro de dépôt: 10805458.6
(22) Date de dépôt: 01.12.2010
(51) Int. Cl.: B63B 21/50

(54) **INSTALLATION NOTAMMENT POUR LA PRODUCTION ET LE TRAITEMENT DE FLUIDES, DU TYPE COMPRENANT UNE UNITÉ FLOTTANTE, POURVU D'UN SYSTÈME D'AMARRAGE À POINT UNIQUE**
INSTALLATION BESONDERS FÜR DIE FLÜSSIGKEITSPRODUKTION UND VERARBEITUNG EINSCHLIESSEND EINES MIT EINEM EINPUNKTANDOCKSYSTEM VERSEHEN SCHIFFES
INSTALLATION PARTICULARLY FOR THE TREATMENT AND PRODUCTION OF LIQUIDS, COMPRISING A FLOATING VESSEL PROVIDED WITH A SINGLE POINT MOORING SYSTEM

(30) Priorité: 23.12.2009 FR 0959542
(43) Date de publication de la demande: 31.10.2012
(73) Titulaire: Technip France, 92400 Courbevoix (FR)
(72) Inventeur: DUPONT, Bernard, F-95600 Eaubonne (FR); DECHIRON, Cyrille, F-78230 Le Pecq (FR)
(74) Mandataire: Thinat, Michel
(86) Numéro de dépôt international: PCT/FR2010/052588
(87) Numéro de publication internationale: WO 2011/086251

(56) Documents cités:
- WO-A1-97/35759
- WO-A1-99/38763
- WO-A1-03/016127
- FR-A1- 2 950 315
- US-A- 3 774 562
- US-A- 5 178 087

## Description

L'invention concerne une installation notamment pour la production et le traitement de fluides tels que du pétrole, du type comprenant une unité flottante telle qu'un bateau, pourvu d'un système d'amarrage rotatif à point unique réalisé par l'intermédiaire d'une tourelle montée en pivot dans une ouverture en forme d'un puits traversant verticalement la coque de l'unité flottante, amarrée sur le fond marin et traversée par des conduites de transfert du fluide aux équipements de l'unité flottante, le système d'amarrage comprenant des dispositifs de guidage de la tourelle dans le puits, qui comportent des moyens de palier axial et radial.

Dans les installations de ce type, le palier axial présente habituellement un diamètre important puisqu'il est disposé près de ou sur le bord du puits sous forme d'une ou de plusieurs couronnes axialement superposées autour des conduites. En effet, le puits peut avoir un diamètre important lorsqu'il faut passer à travers la tourelle un grand nombre de conduites de transfert des fluides. Or, la réalisation de paliers d'un grand diamètre approprié est compliquée, de plus il faut prendre en compte à la conception les déformations structurelles importantes d'affaissement ou d'ovalisation. La fabrication de l'ensemble paliers et structures porteuses s'avère donc difficile, et la préparation des pistes de roulement pour avoir notamment la planéité exigée, comme leur pose, sont très contraignantes.

Une installation de ce type est décrite dans les documents WO 97/35759 et US 5 178 087.

L'invention a pour but de proposer une solution à ce problème.

Pour atteindre ce but, l'installation selon l'invention est caractérisée en ce que la tourelle comporte une partie supérieure, qui comprend un dispositif de réception et de support tournant des conduites de transfert de fluide arrivantes et en ce qu'un palier d'un diamètre plus faible de ladite partie supérieure est interposé entre une partie de tête de la partie supérieure de la tourelle (2) et une structure connectée à la coque de l'unité flottante, le palier supérieur de la tourelle étant situé au-dessus dudit dispositif de réception et de support tournant des fluides.

Selon une caractéristique de l'invention, l'installation est caractérisée en ce qu'elle comporte un palier radial qui est disposé dans le puits, entre la surface périphérique cylindrique extérieure de la tourelle et la paroi de délimitation du puits, avantageusement à un niveau au moins au dessus du niveau d'eau minimum pour permettre une inspection ou autre éventuelle intervention, et avantageusement aussi le plus bas possible pour reprendre au plus près les efforts horizontaux en provenance de l'amarrage et des conduites flexibles sous-marines.

Selon une autre caractéristique de l'invention, l'installation est caractérisée en ce que le palier supérieur d'un diamètre réduit est interposé entre un organe d'appui de la partie de tête de la tourelle avantageusement en forme d'un disque et la structure de support liée au bateau, avantageusement un plateau dont une partie peut être conique.

Selon encore une autre caractéristique de l'invention, l'installation est caractérisée en ce que le palier supérieur comporte deux couronnes de palier, à savoir un palier principal interchangeable et un palier temporaire adapté pour assurer le fonctionnement de l'installation si le palier principal était hors d'usage.

Selon encore une autre caractéristique de l'invention, l'installation est caractérisée en ce que les deux paliers sont disposés à des endroits radialement différents, le palier principal étant avantageusement situé radialement à l'extérieur, notamment pour son remplacement.

Selon encore une autre caractéristique de l'invention, l'installation est caractérisée en ce que les deux paliers principal et temporaire sont superposés dans l'axe de la tourelle, le palier principal étant avantageusement situé plus haut, notamment pour son remplacement.

Selon encore une autre caractéristique de l'invention, l'installation est caractérisée en ce que le palier supérieur est un palier radial en forme d'une rotule glissante permettant la rotation et aussi un mouvement de basculement latéral de la tourelle par rapport à son axe vertical.

Selon encore une autre caractéristique de l'invention, l'installation est caractérisée en ce qu'au moins un des paliers est en forme d'une couronne d'une pièce, ou monobloc, assortie de vérins de levage pour la mise hors service de ce roulement, le cas échéant, pour un remplacement par une autre couronne.

Selon encore une autre caractéristique de l'invention, l'installation est caractérisée en ce qu'au moins un des paliers supérieur comporte une couronne de modules à recirculation de rouleaux, avantageusement coniques, constituant un palier axial et une couronne de modules à recirculation de rouleaux cylindriques, constituant un palier radial, les deux couronnes étant en appui sur une structure en anneau qui prend appui par des patins élastomériques ou via des appuis glissants rotulants sur la structure de support du bateau.

Selon encore une autre caractéristique de l'invention, l'installation est caractérisée en ce qu'au moins un des paliers supérieurs comporte une couronne de modules à recirculation de rouleaux avantageusement coniques sur une piste conique, qui prend appui sur la structure de support du bateau par des éléments avantageusement du type patins élastomériques.

Selon encore une autre caractéristique de l'invention, l'installation est caractérisée en ce qu'au moins un des paliers supérieurs est formé par une pluralité de couronnes superposées dans la direction de l'axe du puits formées par des éléments se déplaçant sur des surfaces coniques dont les lignes orthogonales aux surfaces se recoupent dans un point sur l'axe du puits, au-dessus de la tourelle.

Selon encore une autre caractéristique de l'invention, l'installation est caractérisée en ce que les couronnes sont formées par des modules à recirculation de rouleaux.

Selon encore une autre caractéristique de l'invention, l'installation est caractérisée en ce que les couronnes sont formées par des agencements de roues élastiquement déformables telles que de pneus ou rouleaux à bandage élastiquement déformables ou pneumatiques.

Selon encore une autre caractéristique de l'invention, l'installation est caractérisée en ce qu'elle comporte des plateaux annulaires coniques, comportant chacune un élément de plateau solidaire de la tourelle et un élément de plateau solidaire de la structure de support du bateau, sur lesquels sont posés, en forme de spirales, les conduites de transfert avant d'être amenées à l'équipement du bateau et en ce que le palier supérieur est disposé au-dessus du dispositif des conduites de transfert comportant les plateaux et les conduites.

Selon encore une autre caractéristique de l'invention, l'installation est caractérisée en ce que les conduites de transfert sont connectées dans la partie de tête de la tourelle à des joints tournants collecteurs de fluides et en ce qu'à chacun de ces joints est raccordée une conduite de transfert des fluides à l'équipement du bateau.

Selon encore une autre caractéristique de l'invention, l'installation est caractérisée en ce que le palier radial comporte des éléments de rotation, tels que des roues élastiquement déformables dont les axes s'étendent parallèlement à l'axe du puits, des éléments notamment à recirculation de rouleaux, à roues ou à boggies, ou analogue, montés sur des dispositifs à ressort ou à vérins, ou au besoin via des structures déformables appropriées.

Selon encore une autre caractéristique de l'invention, l'installation est caractérisée en ce que les éléments de rotation en forme de roues sont montés sur des poteaux de support solidaires de la face interne du puits et en contact de roulement avec la surface extérieure de la tourelle, et en ce que la tourelle comporte une deuxième piste de rouleaux qui est coaxiale à la surface extérieure de la tourelle, les roues étant aussi en contact avec la surface intérieure de cette seconde piste.

Selon encore une autre caractéristique de l'invention, l'installation est caractérisée en ce que la structure supportant au moins un palier supérieur est connectée à l'un des ponts du bateau en trois points principaux, et adaptée pour découpler la structure supérieure des déformations et distorsions de la coque du navire.

Selon encore une autre caractéristique de l'invention, l'installation est caractérisée en ce que cette structure porteuse est attachée ou fondée à proximité de la fibre neutre près du milieu de la hauteur de la coque du navire, où les déformations et distorsions précédemment citées sont naturellement amoindries.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :
- la figure 1 est une vue schématique d'une unité flottante telle qu'un bateau, pourvue d'un système à amarrage rotatif à point unique par l'intermédiaire d'une tourelle amarrée au sol marin ;
- la figure 2A est une vue en coupe partielle dans un plan vertical et perpendiculaire à la direction longitudinale du bateau, d'une installation selon l'invention ;
- la figure 2B est une vue à plus grande échelle et en coupe de la partie indiquée en IIB de la figure 2A ;
- la figure 2C est une vue de dessus en direction de la flèche IIC de la figure 2A ;
- la figure 2D est une vue à plus grande échelle en coupe à proximité de l'élément 11 formant palier radial inférieur ;
- les figures 2E et 2F sont des vues similaires à la figure 2B et montrent deux autres possibilités de réalisation d'un palier à la tête de la tourelle, selon l'invention ;
- la figure 2G est une vue de dessus sur un plateau d'enroulement en spirale d'une des conduites de transfert de la figure 2a, indiqué par la flèche IIG de la figure 2A ;
- la figure 2H est une vue latérale de deux modules à recirculation de rouleaux de la couronne de rouleaux en direction de la flèche IIH à la figure 2E;
- la figure 2I est une vue similaire aux figures 2E et 2F et montre une autre possibilité de réalisation d'un palier à la tête de la tourelle.
- la figure 3A est une vue similaire à la figure 2A d'une autre version de réalisation de l'installation selon l'invention ;
- la figure 3B est une vue à plus grande échelle de la partie indiquée sur la figure 3A par la flèche IIIB ;
- la figure 4 est une vue similaire à la figure 2A d'un autre mode de réalisation de l'installation selon l'invention ;
- la figure 5 est une vue similaire à la figure 2A d'un autre mode de réalisation de l'installation selon l'invention ;
- la figure 6A est une vue similaire de la figure 2A d'encore un autre mode de réalisation de l'invention ; et
- la figure 6B est une vue à plus grande échelle de la partie identique pour la flèche VIB sur la figure 6A.
- les figures 7A, 7B et 8A et 8B sont des vues respectivement en perspective et de dessus de deux modes de réalisation particuliers d'un dispositif de support selon l'invention ;
- les figures 9 et 10 sont des vues similaires à la figure 2A et montrent deux versions différentes d'un autre mode de réalisation d'une installation selon l'invention.

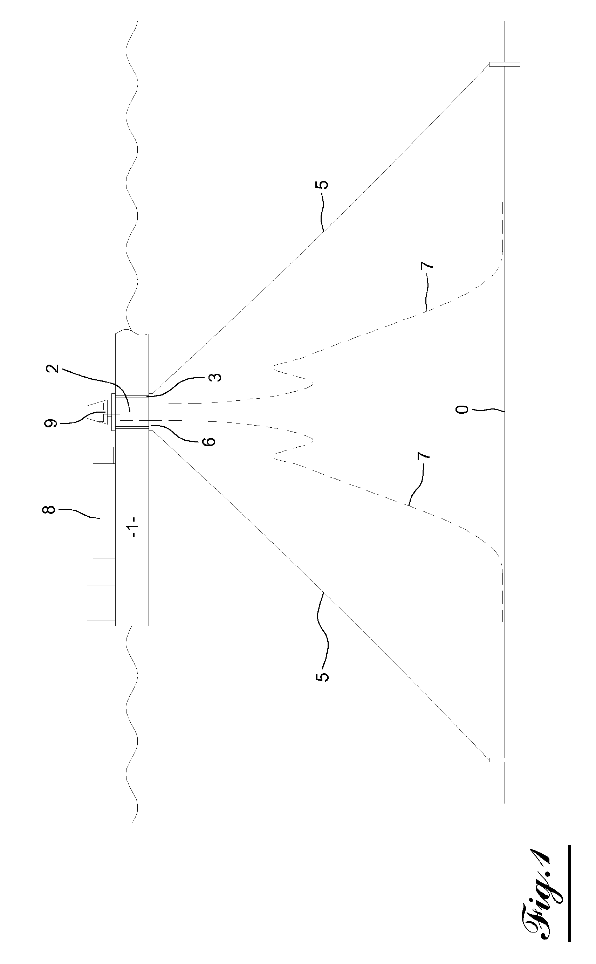

L'invention concerne une installation telle que représentée à la figure 1. Cette installation comprend essentiellement une unité flottante 1 de production, de stockage et de déchargement d'un fluide tel que du pétrole ou du gaz, qui est amarrée par un système d'amarrage rotatif à point d'amarrage unique, par l'intermédiaire d'une tourelle 2 qui est montée en pivot dans une ouverture en forme d'un puits 3 traversant verticalement entièrement l'unité flottante. La tourelle est amarrée au fond marin 4 par des câbles, des chaînes, ou tout autre moyen approprié 5, dont l'autre extrémité est fixée par exemple à la base 6 de la tourelle. La figure montre deux conduites 7 de transfert du fluide parmi le grand nombre prévu pour une exploitation optimale des champs pétroliers ou de gaz. Les extrémités inférieures de ces conduites vont vers des têtes de puits non représentées, tandis que la partie supérieure des conduites passe à travers la tourelle 2 pour transporter le fluide via le dispositif rotatif de transfert de fluide 9 à différents équipements schématiquement représentés par la référence 8 de l'unité flottante.

La tourelle 2 est guidée dans le puits 3 par des agencements de guidage qui comportent un dispositif de palier axial et un dispositif de palier radial, dont les configurations constituent l'objectif essentiel de l'invention.

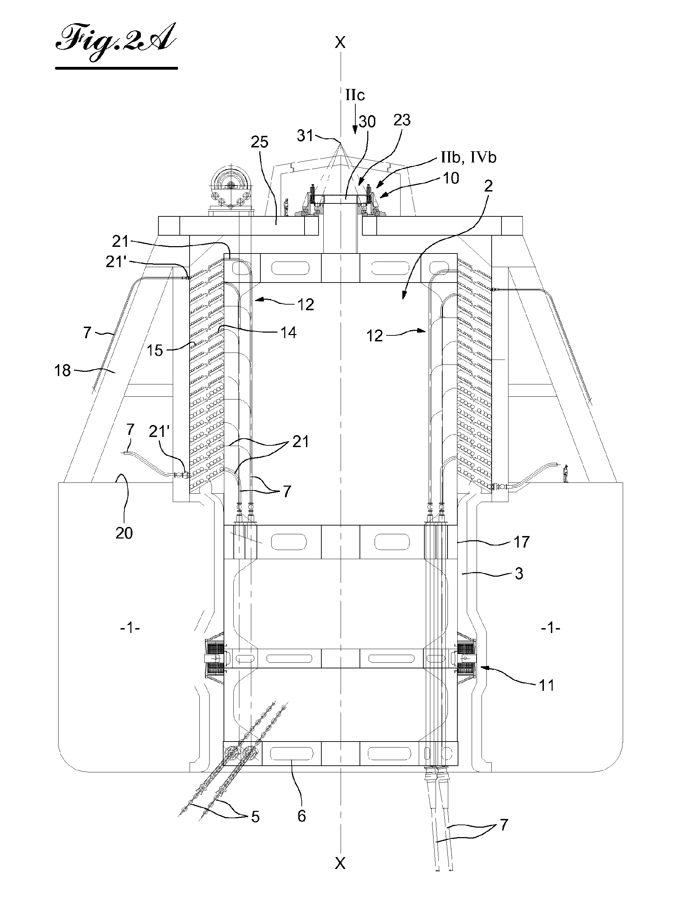

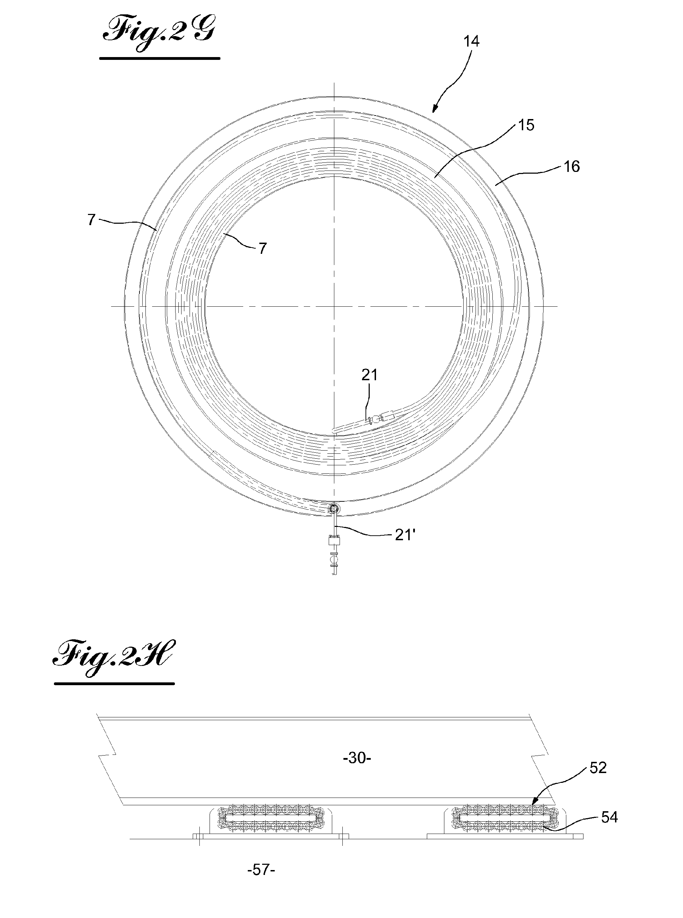

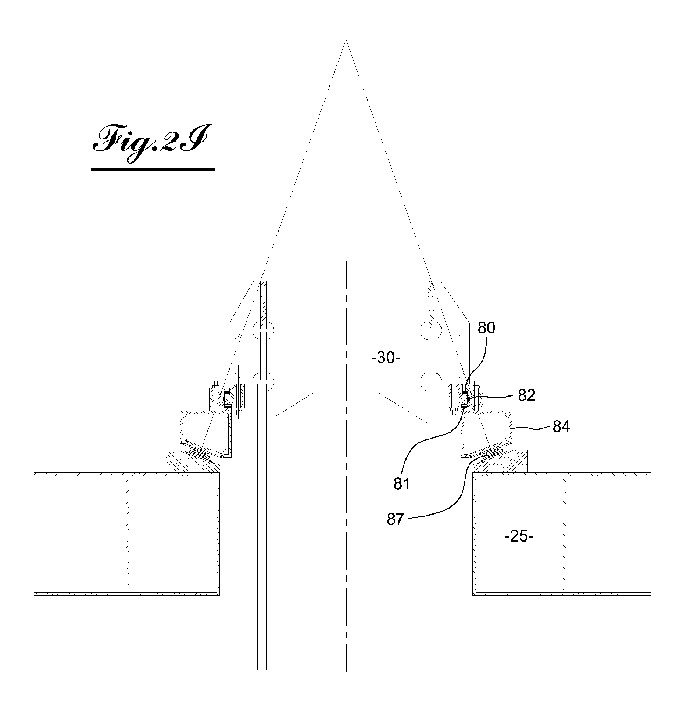

Les figures 2A à 2G illustrent un premier mode de réalisation dont la particularité réside essentiellement dans l'arrangement du palier axial 10. Le palier est situé au-dessus du dispositif 12 de support et d'amenée des conduites 7 de transfert du fluide aux équipements 8 du bateau. Le dispositif 12 comporte un grand nombre de plates-formes annulaires coniques 14, qui sont superposées dans la direction de l'axe x-x de la tourelle et se composent chacune d'un élément de plate-forme 15 qui est monté coaxial sur la surface périphérique cylindrique 17 de la tourelle 2 et un élément de plate-forme 16 qui est supporté par une structure de support en forme d'une tour 18 montée sur le pont supérieur 20 du bateau. Les deux éléments 15 et 16 de chaque plate-forme 14 sont alignés et inclinés vers le bas à partir de la surface cylindrique 17 de la tourelle. Chaque plate-forme conique annulaire 14 est destinée à stocker une conduite flexible de transfert 7. Cette conduite est stockée sur la plate-forme en étant enroulée en spirale de façon que la tourelle puisse effectuer librement plusieurs tours, par exemple cinq, autour de son axe. La figure 2G illustre la disposition d'une conduite 7 sur une plate-forme annulaire 14 formée par les deux éléments de plate-forme 15 et 16 respectivement solidaires de la tourelle 2 et de la tour de support 18. Dans la figure 2G et selon l'exemple de la figure 2A, la conduite arrive à la plate-forme en 21, après être montée axialement dans la tourelle et quitte la plate-forme sensiblement radialement en 21', par exemple via un coude dans le plan vertical.

Comme le montre clairement la figure 2a, la tourelle 3 qui s'étend au-dessus du pont 20 d'une longueur importante pour permettre le montage des plates-formes coniques 14, est surmontée d'une partie de tête 23 qui prend appui sur une plate-forme supérieure 25 située en haut de la structure de support 18 du bateau, par l'intermédiaire du palier 10. Le dispositif de support 12 des conduites flexibles présente nécessairement un diamètre externe relativement important imposé par le rayon de courbure minimum optimal en dessous duquel la conduite flexible ne doit préférentiellement pas être courbée. Selon l'invention, le palier 10 est situé au-dessus du dispositif de support 12 des conduites flexibles 7 posées en spirale sur les plateaux coniques 14. Il peut alors avoir un diamètre nettement inférieur au diamètre des plateaux coniques 14, imposé par la courbure des flexible et, de manière tout aussi indépendante, inférieur au diamètre du puits 3 par exemple imposé par un grand nombre de conduites sous-marines. Mais compte tenu de l'implantation très en hauteur et de l'effort radial de retenue de l'unité flottante tout en bas de la tourelle, le palier 10 ne pourrait être réduit en diamètre qu'à la condition qu'il ne reprennent pas également les contraintes dues au basculement de la tourelle par rapport à sa position verticale, notamment dû à l'élasticité de la tourelle et à celle du palier inférieur. Cette condition est par exemple aisément remplie à condition de retenir un montage rotulant soulageant la contrainte de basculement.

Une autre solution valable et conforme à l'invention est de monter le palier inférieur adéquatement rigide de grand diamètre et le palier supérieur de diamètre notablement réduit afin qu'ils constituent ensemble un pivot, le palier supérieur axial faisant alors office de butée de reprise des efforts axiaux, sans que l'effet de rotule soit alors indispensable.

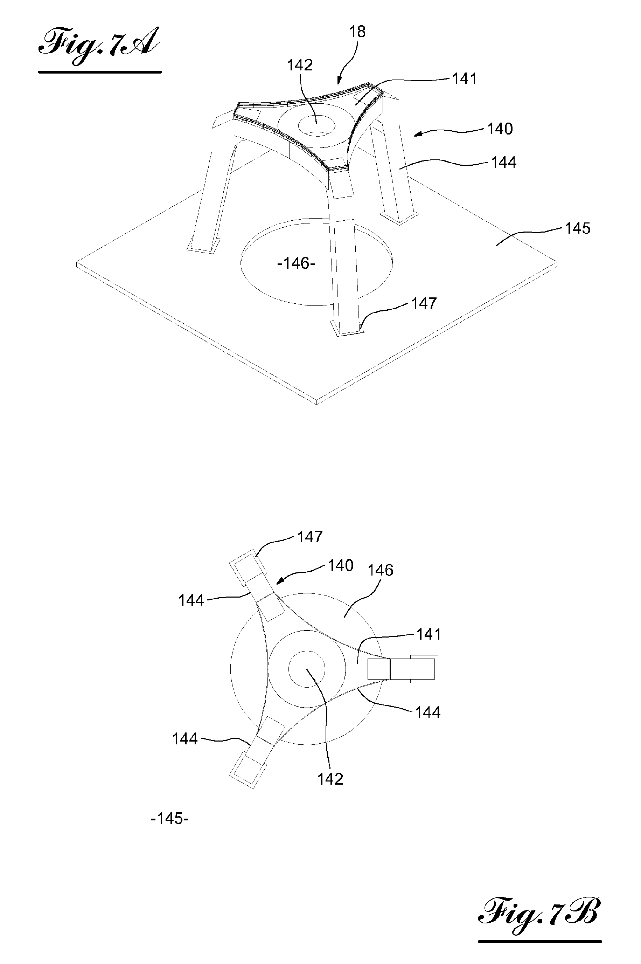

Selon l'invention, la nouvelle disposition en hauteur du palier supérieur 10, avec un diamètre le plus petit possible, offre une possibilité avantageuse pour le cheminement de nombreuses conduites de fluides, qui ne pouvait s'envisager avec les arrangements connus des paliers axiaux placés sous le dispositif de transfert de fluide ou autour de celui-ci, ou sur le pont 20 du bateau autour du puits et donc d'un grand diamètre. De plus, placer le petit diamètre du palier supérieur bien au dessus du point de jonction avec la structure du navire permet de résoudre les problématiques liées aux déformations, notamment l'ovalisation autour du puits, en s'éloignant de celui-ci verticalement et en réduisant le diamètre du palier en jeu. En particulier, la structure portant le palier haut peut être conçue avantageusement avec trois pieds rotulés à la base, afin de présenter un profil de descente des charges en trois points sur l'unité flottante, sans créer de contraintes exagérées dans les pieds eux-mêmes, comme le montre les figures 7 à 11.

En effet, il est exigé dans le domaine des installations selon l'invention que la fiabilité des paliers doit être telle qu'un fonctionnement correct soit garanti sur par exemple 25 à 30 ans sans interruption de service. De cette contrainte de fiabilité découle que les constructeurs des agencements de guidage de la tourelle dans le puits doivent faire preuve d'une expérience forte quant à la garantie de la conception et de la fabrication des paliers. De plus, il pèse des contraintes non seulement sur le concepteur de la structure globale impliquant la rigidité, la précision de fabrication et de montage etc., mais également sur l'opérateur futur de l'équipement qui doit intégrer dans ses charges de coûteuses opérations de surveillance régulières et d'entretiens rigoureux faisant appel à de hautes qualifications au besoin.

Dans le cas de l'utilisation d'un palier de diamètre réduit tel que rendu possible par l'invention, non seulement ces problématiques sont résolues ou significativement réduites mais, en outre, on peut envisager de doubler la fonction de support axial, par emboîtement sur deux rayons différents ou par superposition verticale de deux paliers de capacité portante similaire. Il devient ainsi possible de remplacer un palier rotulé usé ou défectueux par un autre palier rotulé, sans déposer les conduites et sans interrompre les opérations d'exploitation normales. Cela est rendu possible par l'absence de croisement topologique entre le cheminement des fluides et la trajectoire d'extraction du palier supérieur remplaçable. De plus la réduction en diamètre permet d'envisager un palier lisse pour le palier supérieur sans générer de trop grand couple de frottement à la rotation, compatible avec la capacité en moment des lignes d'ancrages.

Mais la disposition à palier supérieur doublé entraîne de nouvelles exigences, notamment quant à la conception des deux paliers rotulés qui doivent avoir la capacité de reprendre chacun seul la totalité de la charge radiale supérieure et de la charge axiale globale. Dans l'invention, les centres théoriques de rotulage des deux paliers sont avantageusement concordants, ou bien ils sont très proches. Ainsi, l'invention prévoit de doubler le roulement et de rendre le roulement extérieur, ou celui d'au-dessus, remplaçable. Pour cela, le second palier, radialement intérieur ou inférieur, ne reprend pas la charge verticale durant l'opération normale du système. Cependant, on pourra aussi envisager de lui laisser la possibilité de copier les mouvements du palier principal pour éviter tout risque de blocage mécanique, mais pratiquement sans charge et donc sans usure notable. Le premier palier, ou palier principal, situé à l'extérieur ou plus haut reprend donc la totalité de l'effort axial et autant que de besoin le faible effort radial supérieur, cela de manière continue durant l'opération normale de l'ensemble. Cependant, quand celui-ci atteint sa limite de durée de vie ou de conception ou bien s'il est victime d'une avarie, on peut envisager de le remplacer. Alors, durant ce remplacement et donc temporairement, c'est le palier intérieur qui reprendra la charge axiale et, le cas échéant, radiale.

Au palier rotulant 10 est associé un palier radial inférieur 11 placé aussi bas que possible pour réduire les moments de basculement, mais préférentiellement au-dessus du niveau d'eau minimal pour pouvoir envisager une inspection ou un remplacement plus aisé.

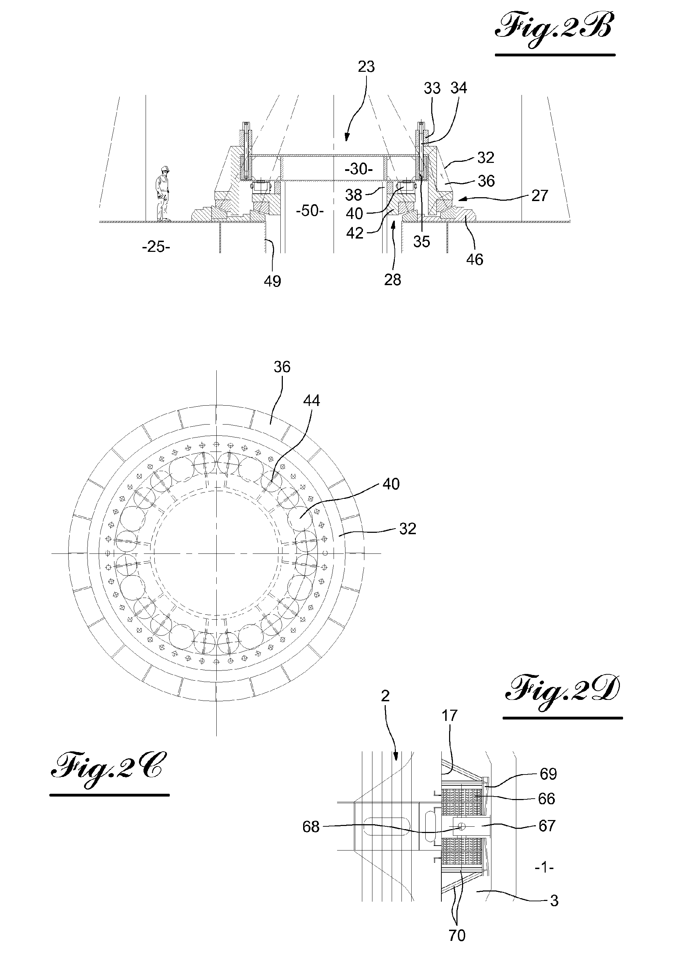

Les figures 2B à 2F illustrent plusieurs possibilités de réalisation d'un palier rotulé supérieur 10 qui est de diamètre réduit, indépendant du, et donc ici notablement inférieur au diamètre du système global de transfert des fluides, conduites et joints tournants.

La figure 2B montre un agencement de palier supérieur 10, qui comporte un palier de type rotule interchangeable 27, par exemple réalisé sous forme d'une couronne rotulée, radialement externe, et un palier radialement interne 28 de type rotule non interchangeable s'il est réalisé sous forme d'une couronne monobloc ou avantageusement interchangeable partie par partie si elle est segmentée. Il est à noter que les paliers 27 et 28 sont adéquatement configurés pour reprendre les contraintes axiales nécessaires mais sans opposer une résistance au mouvement de basculement de la tourelle par rapport à sa position verticale dû aux flexibilités relatives des structures et à celle du palier inférieur.

Les paliers 27 et 28 comportent des organes de roulement qui sont en appui sur une surface de palier en forme d'une calotte sphérique. Les centres de courbure de chacun se superposent, se rejoignent, théoriquement en 31 sur l'axe du puits au-dessus de la tourelle.

Pour le logement du dispositif de palier 10, la partie de tête 23 de la tourelle (figure 2B) comporte un disque supérieur 30 qui assure le transfert de la charge axiale depuis la tourelle au palier principal 27 par l'intermédiaire d'une pièce de liaison 32 en forme d'un anneau, qui est reliée au disque 30 par l'intermédiaire de boulons précontraints 34 à écrou extérieur 33 et écrou borgne 35 solidaires du disque. L'anneau de liaison 32 comporte des nervures de renforcement radial 36 et un rebord radialement en saillie 37 par lequel l'anneau repose sur le palier 27.

Le disque 30 peut transférer les charges axiales sur le palier radialement interne de remplacement 28 par l'intermédiaire d'organes de calage 38 discontinus ou en forme d'anneau et d'une pluralité de vérins de levage 40, ou tout dispositif assurant la même fonction, pour la maintenance ou des remplacements, d'une part, et d'une pièce annulaire intercalée 42, d'autre part. Les organes de calage et les vérins sont en appui sur la face horizontale supérieure de la pièce annulaire 42 dont les faces inférieures radiales et axiales sont en appui sur le palier 28. Comme le montre la figure 2c, les vérins 40 sont répartis, de façon angulairement équidistante, autour de l'axe de la tourelle. Entre deux vérins 40, il est prévu deux ouvertures circulaires 44 qui sont notamment destinées à permettre le raccordement hydraulique ou l'évacuation des vérins.

Le palier principal 27 est posé, du côté de la structure porteuse solidaire du bateau, sur une pièce de calage radiale coaxiale 46. Cette pièce est fixée sur la face supérieure du plateau porteur 25 de la tour de support du bateau. Ce plateau présente un orifice cylindrique 49 à travers lequel s'étend une partie cylindrique 50 de la partie de tête de la tourelle sur l'extrémité libre de laquelle est placé le disque supérieur 30.

Il ressort de ce qui précède que, durant les opérations d'entretien et/ou de remplacement nécessaires sur le palier extérieur 27, le dispositif de vérinage 40 à haute capacité de levage (par exemple à haute pression hydraulique) est actionné pour soulever la structure en forme de disque 30 de la tourelle. Ce mouvement vertical ascendant permet de soulager le palier rotulé principal 27 en transférant les efforts vers le palier temporaire 28 qui opèrera pendant toute la durée du remplacement du palier principal. Le transfert de charge s'effectue avec la garantie de concurrence des efforts de supportage grâce à la concordance des points de pivotement et de rotulage durant toute l'opération. On peut alors déprécontraindre le dispositif d'assemblage formé par les boulons 34 et la pièce de liaison 32 et abaisser la structure du disque par la descente contrôlée des vérins 40 jusqu'à venir reposer sur l'anneau de calage 38, ce qui permet ensuite d'extraire par le haut les boulons, la pièce de liaison 32 et enfin surtout le palier extérieur principal 27.

L'opération inverse permet de réinstaller le nouveau palier rotulé, de disposer l'anneau de liaison principal 32 et les boulons 34, puis de lever le disque 30 afin de précontraindre les boulons, enfin de redéposer le disque 30 qui s'appuiera alors sur le nouveau palier principal 27 par l'intermédiaire de la pièce de liaison 32 et non plus sur le palier temporaire 28 par l'intermédiaire de la pièce de calage 38.

Il est à noter que, dans cette solution de l'arrangement en hauteur du palier rotulant 10, la réduction de diamètre apporte aussi une réduction des couples de frottement en provenance de ce même palier et diminue ainsi la résistance de l'ensemble à la rotation, ce qui constitue une amélioration et un avantage de conception lorsqu'un grand nombre de conduites flexibles se déplacent par glissement et frottent sur les plateaux, par exemple. Ainsi, on peut même utiliser un palier principal lisse 27 de type rotule glissante, même en cas de fortes charges axiales et radiales, notamment pour les champs de grande profondeur ou nécessitant de nombreuses conduites flexibles. On peut aussi envisager que le palier temporaire 28 soit de type rotule glissante réputé très sûr. La rotule glissante peut être mise en oeuvre par exemple par un couple de matériaux de bonne qualité frottante du type bronze avec lubrifiant sur acier inoxydable. Le palier intérieur 28 peut être modulaire, par exemple en forme d'un palier rotule segmenté pour le remplacement par partie, mais le palier extérieur principal 27 est avantageusement toujours d'une pièce, par exemple une rotule glissante monobloc et étanchée, ou une couronnes à rouleaux monobloc et étanchée, pour un fonctionnement des éléments glissants ou roulants en milieu protégé et lubrifié, au bénéfice de la durée de vie et de la fiabilité de fonctionnement.

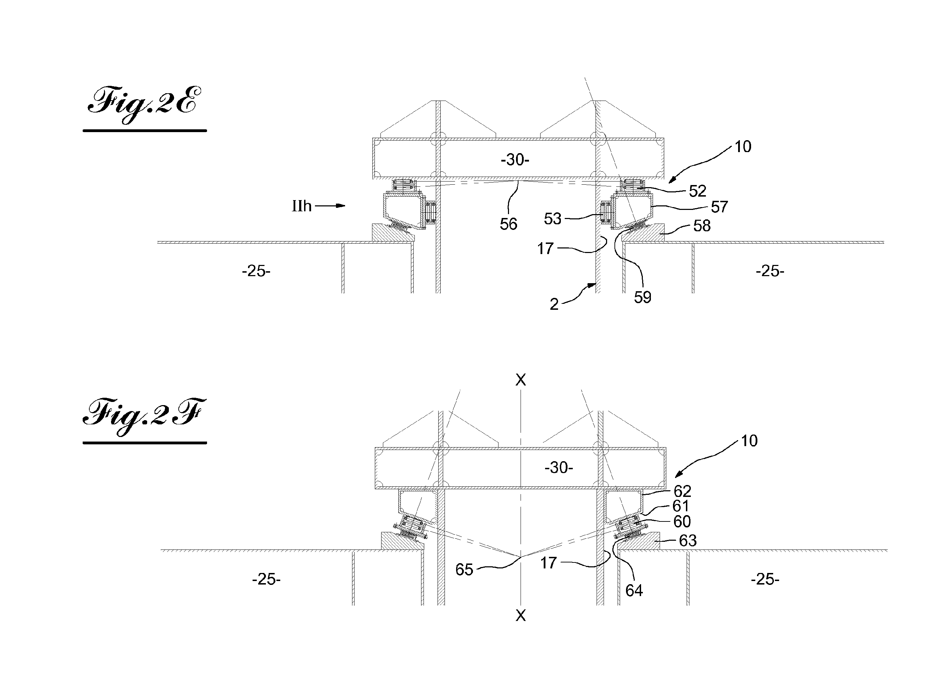

La figure 2E illustre une réalisation d'un palier à rotule qui est composé de modules à recirculation d'éléments roulants 52, 53, par exemple à recirculation de rouleaux. Etant de nature modulaire, ces modules sont arrangés en couronne de manière interchangeable.

Ces modules sont connus en soi et utilisés, de façon générale, pour le déplacement de fortes charges. Comme le montrent les figures 2E et 2H, un module à recirculation de rouleaux comporte un grand nombre d'éléments roulants, par exemple de rouleaux 54 cylindriques en radial ou avantageusement coniques en axial, qui sont reliés à leurs extrémités à des chaînes de façon à pouvoir se déplacer autour d'une plaque de soutènement en provoquant ainsi une recirculation intégrée. Une fois arrivé à la fin de la plaque de soutènement, le dernier rouleau escamoté est acheminé par la traction des éléments de maillon de chaîne jusqu'à l'avant de la plaque où il fait demi-tour et se retrouve introduit de nouveau entre la piste et la plaque. L'utilisation de tels modules à recirculation de rouleaux présente pour avantages notamment que les éléments indépendants sont peu volumineux et légers relativement à la charge élevée qu'ils supportent, qu'ils sont faciles à installer et à manutentionner ultérieurement. Ils permettent de bien distribuer la charge sur de très nombreux petits rouleaux, aussi petits que nécessaire.

Dans le cas de l'invention, les modules axiaux 52 et radiaux 53 sont disposés sous forme d'une couronne entre le disque 30 de la tourelle et un anneau de support rigidifié 57 qui, en revanche, est supporté sur une bague d'appui incliné 58 qui repose sur le plateau de support 25 de la tour de support du bateau. Entre l'anneau 57 et la bague 58 est disposé un élément 59 du type basculant, qui est réalisé soit sous forme d'un palier en anneau complet, soit sous forme de blocs discontinus. L'élément 60 est par exemple soit de type glissant rotulant dans le sens du basculement, soit avantageusement de type élastomère fretté. Les modules à recirculation 53 sont interposés entre la face cylindrique extérieure 17 de la tourelle et la face cylindrique en regard de l'anneau 57. Les modules 52 sont du type à rouleaux coniques en appui sur une piste plane et constituent donc un palier axial, tandis que les modules 53, également à rouleaux mais ici avantageusement cylindriques, constituent un palier radial. Les axes des rouleaux coniques des modules 52 s'entrecoupent dans un point 56 situe sur l'axe de la tourelle, et du puits.

Le module axial 52 combinés avec le module radial 53 forment une couronne d'orientation modulaire, qui est montée dans un ensemble rotulant par rapport aux supports 25 et 58, grâce à un ensemble d'éléments 59 avantageusement à patins élastomériques.

Dans les paliers, on pourrait utiliser des modules dont la plaque d'appui est cintrée selon une portion de cône et sur laquelle des éléments recirculants coniques viennent rouler. Ces rouleaux peuvent être pourvus à chaque extrémité d'axe d'une chaîne de synchronisation, la chaîne extérieure ayant un pas plus grand que la chaîne intérieure. Chaque module ainsi constitué est monté sur un patin élastomérique rotulant ou monté sur un anneau continu, lui-même rotulant par l'intermédiaire de patins du même type sur le plateau 25.

La figure 2F illustre un palier supérieur 10 qui comporte des modules à recirculation de rouleaux coniques 60 sur une piste conique 61 d'un anneau de support 62 qui est fixé latéralement contre la surface périphérique de la tourelle et sous le disque 30 de celle-ci. Les rouleaux coniques 60 sont disposés de façon que leurs axes s'entrecoupent sur l'axe X-X du puits ou de la tourelle au puits 65. Les modules 60 prennent appui sur une bague de support incline 63, solidaire du plateau de support 25, par l'intermédiaire d'éléments 64 de type patins élastomériques.

La figure 2D se réfère à la figure 2A et concerne le palier radial 11 interposé entre la tourelle 2 et la paroi de délimitation du puits 3, qui est disposé le plus bas possible dans le puit pour réduire les moments de basculement et avantageusement juste au-dessus du niveau d'eau minimal pour l'inspection et l'entretien. Il est formé, comme le montre la figure 2D, par une couronne constituée d'une succession de roues élastiquement déformables 66 dont les essieux s'étendent parallèlement à l'axe du puits. Ces roues peuvent être par exemple des pneus ou des roues à bandage de roulement élastiquement déformable ou pneumatique. Les roues sont montées sur des poteaux de support 67 qui sont solidaires de la face périphérique de l'unité flottante, qui délimite le puits 3, et s'étendent radialement. Les roues sont groupées par paires. Les roues de chaque paire sont disposées de part et d'autre du poteau 67, l'essieu support des pneus **jumelés** ayant la capacité de pivoter perpendiculairement à l'axe des pneus autour de l'axe 68. Leurs essieux sont axialement alignés. Les roues sont en contact de roulement avec la face cylindrique extérieure 17 de la tourelle.

Pour obtenir une meilleure utilisation des roues 66, on prévoit pour la couronne de roues 66 une piste circulaire extérieure 69, qui est montée solidaire et coaxiale à l'axe de la tourelle, par l'intermédiaire des traverses de support 70, et qui est susceptible de constituer une piste de roulement opposée interieure pour les roues 66.

En effet, lorsque la tourelle dévie radialement de sa position dans l'axe du puits, seulement les roues du côté de la déviation sont comprimées, alors que les roues diamétralement opposées sont écartées de la surface périphérique formant la piste de roulement de la tourelle. Par conséquent, ces roues ne participent pas au transfert radial des charges. C'est pour pallier cet inconvénient que la piste radialement externe 69 est prévue. Du fait qu'elle est solidaire de la tourelle, elle provoque une compression aussi des roues radialement opposées et normalement inactives.

Les roues peuvent également être montées d'une autre manière parfaitement compatible et sans changer le principe de l'invention, où la charge ne passe pas par leur moyeu (non représenté, voir demandes de brevet français n°09 56 599 et 09 56 618).

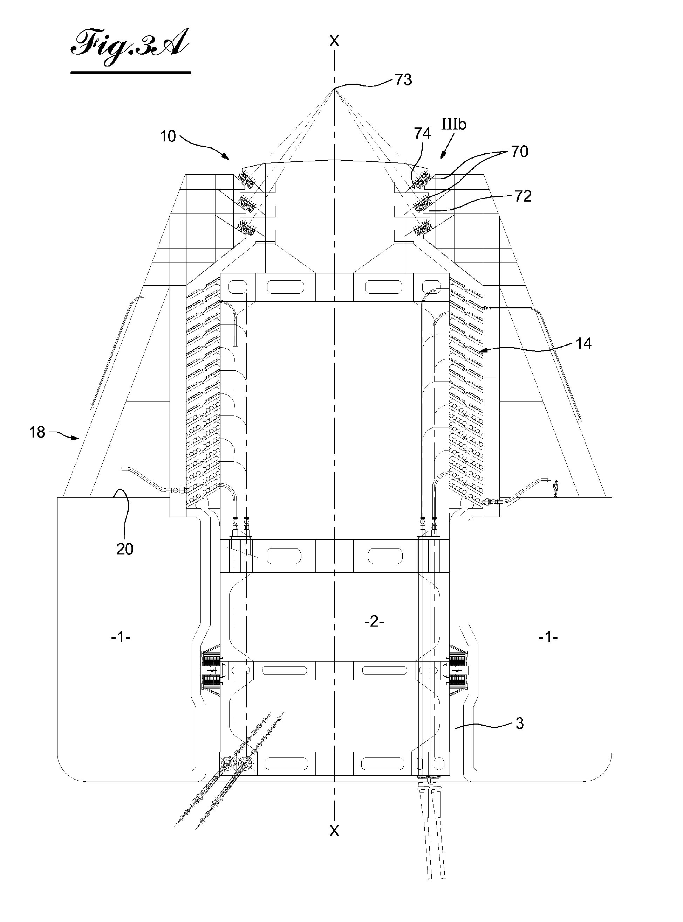

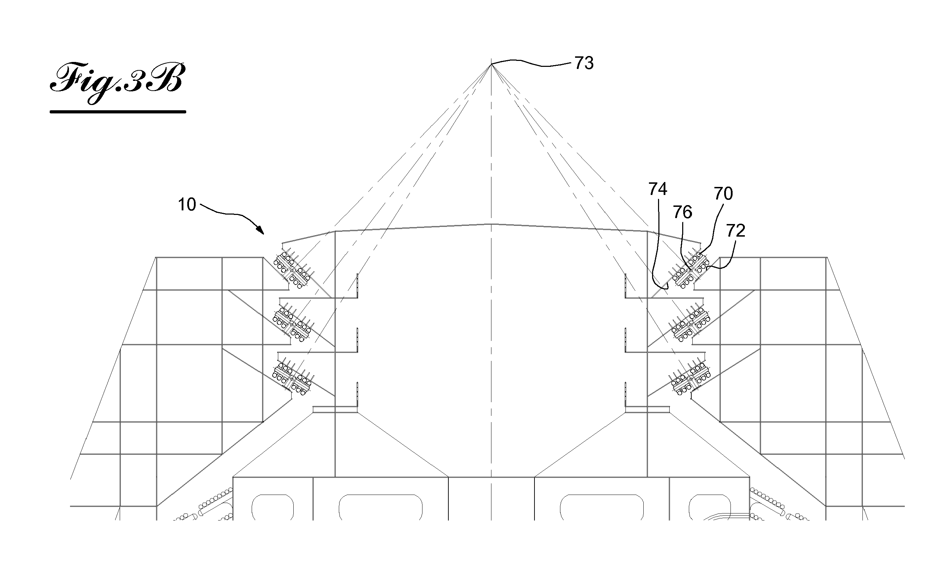

Les figures 3A et 3B présentent une autre solution de réalisation de l'invention, par exemple basées sur des pneus. Mais les arrangements proposes peuvent aussi être compatibles avec des roues, des galets, des boggies, des paliers lisses, des modules à recirculation de rouleaux, ou analogues, montés dans des structures rigides, éventuellement déformables ou flottantes, comme elle est décrit dans les demandes de brevet français n°09 56 599 et 09 56 618 pas encore publiées à la date de dépôt de la présente demande de brevet et qui appartiennent à la demanderesse.

L'installation selon la figure 3A comporte également des plateaux coniques 14 sur lesquels les conduites flexibles sont disposées en spirales et le palier supérieur est d'un diamètre réduit comparativement à celui du puits et celui nécessaire pour le passage des conduites rigides et flexibles de transfert de fluide dans et autour de la tourelle. Mais différemment de la figure 2A, le palier 10 comporte une pluralité de couronnes 70 dont chacune est formée par un agencement de roues élastiquement déformables et latéralement juxtaposées dont les essieux sont communs et portés par un plateau 72 de la structure de support du bateau. Chaque plate-forme 72 est inclinée vers le bas en direction de l'axe du puits. L'inclinaison des trois plates-formes 72 pour les trois couronnes 70 est telle que les lignes orthogonales aux plates-formes s'entrecroisent dans un point commun 73 situé sur l'axe X-X au-dessus de la tête de la tourelle.

La tête de cette dernière comporte, pour chaque couronne 70, une plate-forme 74 dont la face inférieure située en regard de la plate-forme 70 est inclinée de façon complémentaire et constitue une piste de roulements coniques pour Les pneus de la couronne 70.

Sur les figures 3A et 3B le palier supérieur 10 présente une pente relativement forte et est constitué à partir de plusieurs couronnes modulaires superposées dans l'axe du puits, chaque couronne étant faite d'un assemblage de modules à pneus jumelées sur essieux pivotant 76 analogues à la figure 2D.

La figure 2J montre encore une autre version de réalisation du palier supérieur 10. Dans ce cas, le palier est constitué par un roulement à trois rangées de rouleaux 80, 81, 82 qui sont coaxiales à l'axe de la tourelle et espacés dans la direction de cet axe. Les rouleaux des couronnes 80 et 82 sont à axe horizontal pour les efforts axiaux et de renversement et la couronne 82 est formée par des rouleaux dont les axes sont verticaux pour les efforts radiaux. Chaque couronne est interposée entre deux pistes de roulement, dont l'une est solidaire de la tourelle et l'autre d'un anneau de support 84 qui prend appui sur une bague de support 85 du plateau 25 de la structure de support du bateau, par l'intermédiaire de patins en élastomère fretté 87 aptes à se déformer légèrement par cisaillement, ou par tout autre disposition de rotulage, notamment pour suivre le basculement de la tourelle, dû aux défauts d'alignement de la tourelle sur une grande hauteur et, le cas échéant, les déplacements au niveau du palier inférieur si celui-ci est notablement élastique et pour se libérer des déformations des structures de l'unité flottante sous l'effet des éléments extérieurs, courant vagues et vents.

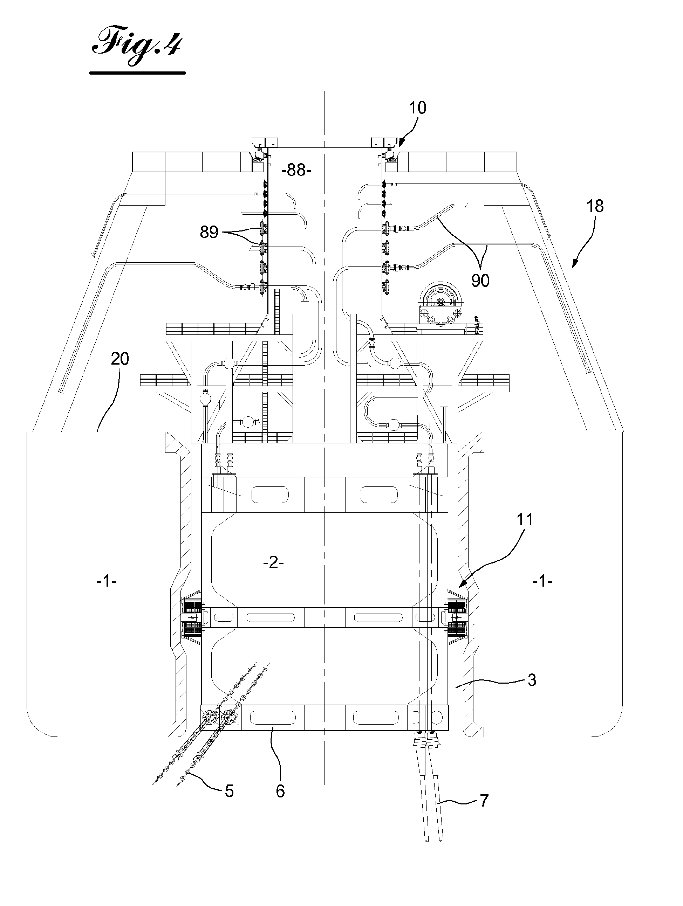

La figure 4 montre un autre mode de réalisation de l'installation selon l'invention, selon laquelle les conduites de transfert de fluide 7 ne sont plus stockées sur des plates-formes coniques, sous forme de spirales, mais montent à l'intérieur de la tourelle dans la partie cylindrique de tête 88, qui est alors pourvue d'une pluralité de joints tournants fluides classiques 89 réalisés sous forme de collecteurs récepteurs de plusieurs conduites et à chacun desquels est raccordée une conduite 90 de sortie vers l'équipement du bateau. La figure 4 montre, seulement à titre d'exemple, huit joints tournants de type classiques, c'est-à-dire à chambres annulaires toroïdales composées pour moitié d'une partie du stator lié à la tourelle et pour moitié par des rotors. Comme cela est illustré, ces joints peuvent être de dimensions différentes en fonction du débit et des fluides qu'ils doivent véhiculer. Le palier haut 10 qui est représenté dans l'exemple est du type représenté à la figure 2E. On constate que l'ensemble de conduites et leur support sont disposés en-dessous du palier 10, qui peut être de diamètre aussi petit que nécessaire, voire jusque la tête de la tourelle soit sans trou , comme par exemple dans le cas du palier lisse rotulé de la figure 2B.

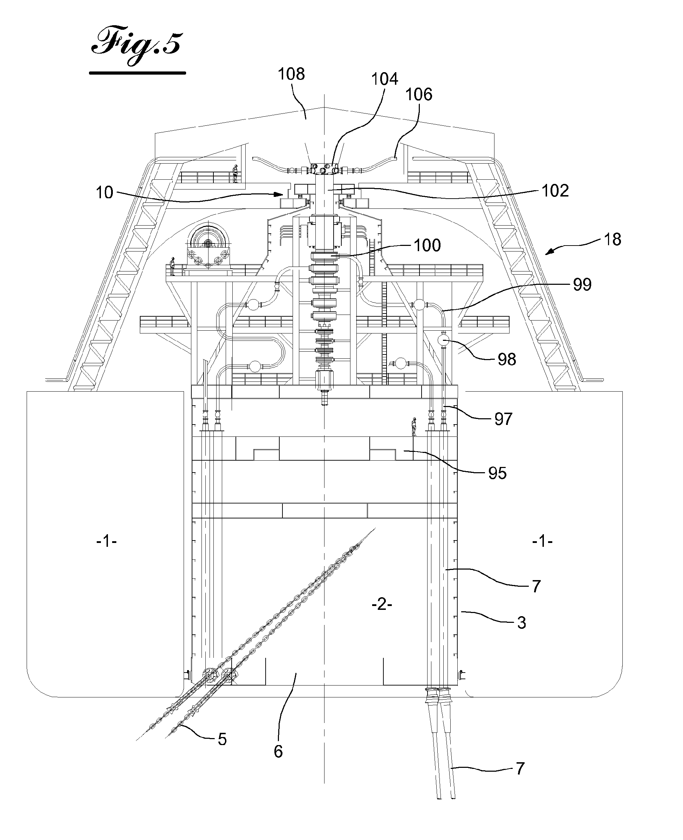

La figure 5 montre un mode de réalisation de l'invention dans lequel, comme dans le cas de la figure 4, les conduites flexibles 7 sont amenées à une table de support 95 montée à l'intérieur de la tourelle, et sont ensuite connectées chacune à une canalisation rigide 97 qui s'étend à une vanne 98 destinée à recevoir plusieurs canalisations d'arrivée 97 et qui ne comporte qu'une canalisation de sortie 99. Les vannes ainsi interposées assurent donc une réduction du nombre des conduites. Chaque conduite ou canalisations de sortie 99 est reliée à un anneau 100. Les anneaux 100 d'un nombre approprié sont axialement superposés, coaxialement à l'axe de la tourelle. Dans le dispositif d'anneaux 100 s'engage coaxialement un élément formant moyeu central 102 qui s'étend axialement au palier supérieur 10 et se termine, au-dessus du palier, par un anneau 104 de répartition de fluide à des conduites de sortie 106 qui vont aux équipements de traitement et de stockage du bateau. L'extrémité supérieure du moyeu 102 est solidaire d'une construction formant le toit 108 monté sur la structure de support en forme de tour 18 du bateau, par exemple avantageusement à trois pieds, comme illustré aux figures 7 à 11.

Dans ce mode de réalisation, le palier supérieur 10 conserve son diamètre réduit malgré la disposition des canalisations de sortie 106 au-dessus du palier, grâce à la réduction du nombre des canalisations au moyen des vannes 98. Et le palier est toujours situé au-dessus de l'ensemble des nombreuses conduites et canalisations dans la tourelle et du dispositif de support et est ainsi mieux isolé des déformations de la coque.

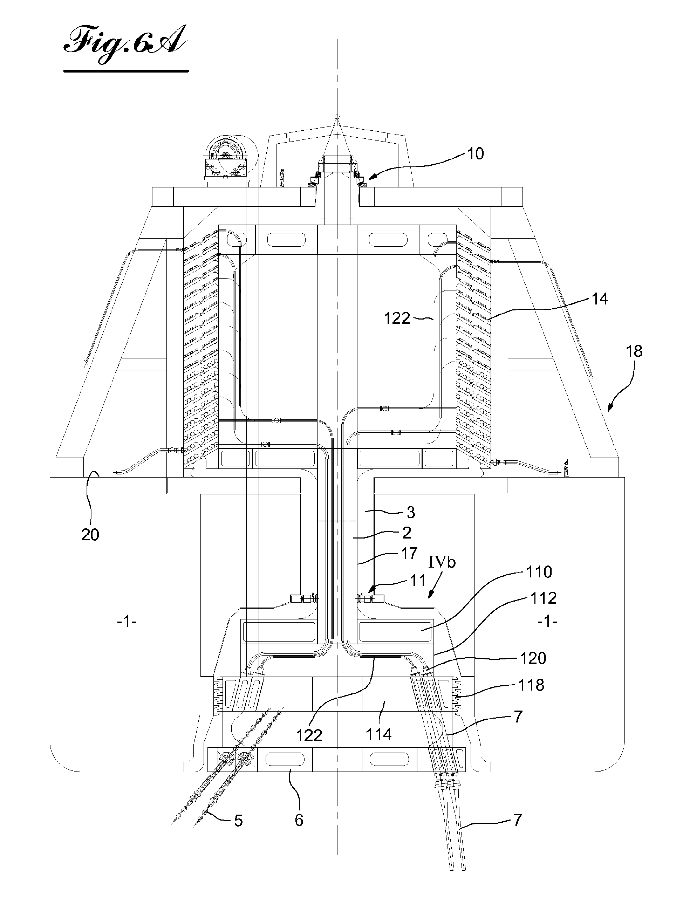

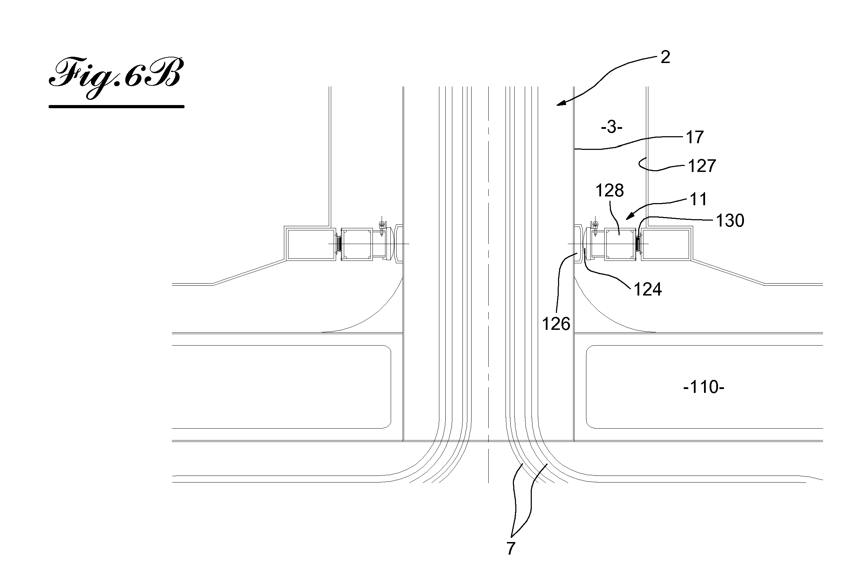

Les figures 6a et 6b illustrent un mode de réalisation de l'invention dont la partie supérieure, au-dessus du pont supérieur 19 du bateau correspond au mode de réalisation selon la figure 2A avec un palier supérieur du type du palier de la figure 2E. Ce mode de réalisation a pour particularité que le diamètre du palier inférieur 11 présente également un diamètre réduit, cependant potentiellement un peu plus grand que le palier supérieur. Ce palier 11 est interposé entre la surface du puits 3 et la surface périphérique extérieures 17 de la tourelle 2. Les diamètres du puits et de la tourelle sont réduits en conséquence à son niveau.

La partie de diamètre réduit de la tourelle s'étend en bas jusqu'à un niveau entre le tirant d'eau inférieur et supérieur. A la base de la partie de tourelle de diamètre réduit, est disposée une structure en forme de caisson annulaire 110 qui s'étend radialement vers l'extérieur et est engagé dans une partie radialement élargie 112 du puits. La tourelle comporte en dessous du caisson 110, axialement décalée, une table 114 de support des conduites flexibles 7 qui remontent du fond marin, et la table de fixation des câbles d'ancrage 5. La table 114 de support des flexibles 7 est située au niveau d'eau inférieur. Entre cette table et la paroi du puits est disposé un dispositif de chicane 118 destiné à éviter les mouvements de pompage de l'eau dans le puits.

Les conduites flexibles 7 traversent la table 114 et sont reliées chacune par l'intermédiaire d'une tête de conduite flexible 120 à une canalisation rigide 122. Ces canalisations sont configurées de façon à s'étendre en direction de l'axe du puits et de la tourelle pour remonter ensuite vers la partie supérieure de la tourelle, axialement à travers la portion de diamètre réduite de celle-ci. Cette disposition rapprochée dans cette partie de tourelle d'un diamètre réduit est possible parce qu'il s'agit de canalisations rigides qui sont positionnées à l'intérieur de la tourelle par des moyens de support appropriés non représentés. C'est donc seulement la partie inférieure du puits et de la tourelle près de la quille, qui assure la réception des conduites flexibles 7 et doit donc présenter un diamètre suffisamment grand notamment pour éviter tout risque de contact entre les conduites qui doivent pouvoir bouger les unes par rapport aux autres sans risque de se heurter et de s'endommager.

Ce mode de réalisation de l'invention se distinguant par l'utilisation d'un palier inférieur 11 également d'un diamètre réduit, en combinaison avec un palier supérieur 10 également de diamètre réduit présente l'avantage par ce qu'il permet de réduire, conjointement au palier supérieur, le couple global de résistance à la rotation de l'ensemble, d'où l'utilisation possible même d'un palier simplement glissant, et non obligatoirement rotulant en bas, noté 124 sur la figure 6B et la possibilité de le placer très bas, ce qui présente l'avantage de réduire les bras de levier et donc les efforts sur ce même palier. Le palier 124 est disposé entre une saillie de support 126 de la tourelle et un anneau 128 qui prend appui du côté radialement extérieur 127 sur la paroi du puits par l'intermédiaire d'un appui en élastomère 130.

Il est à noter que cet arrangement serait également compatible avec un joint tournant fluide conventionnel à condition d'intercaler entre le joint tournant et les conduites sous-marines les utilités de brassage des conduites, des collecteurs et les utilités des systèmes de curage précédemment évoqués.

Il ressort de ce qui précède que de multiples possibilités de réalisation du palier haut 10 peuvent être retenues. Le palier peut avantageusement être monté en rotule et est de diamètre réduit, voire de diamètre intérieur nul, et inférieur au diamètre des spirales ou des joints tournants classiques et au diamètre du puits. Le palier peut être une succession de segments glissants, par exemple en forme de patins, à portée sphérique. Il peut être une rotule glissante continue à portée sphérique ou constitué d'un roulement, par exemple une couronne à rouleaux à trois pistes, montées sur des patins en élastomère fretté ou glissant. Le palier peut être constitué à partir d'une couronne modulaire faite d'un assemblage de modules à recirculation de rouleaux ou peut être constitué de plateaux superposés portés par des essieux à roues élastiquement déformables, par exemple à pneus.

Concernant le palier bas 11, il est avantageusement un palier radial glissant verticalement ou radial pur qui peut être constitué éventuellement par des roues telles qu'illustrées sur les figures à titre d'exemple, par des patins de glissement classiques, éventuellement assortis d'un appui rotulant par exemple en élastomère fretté, par une couronne de modules à recirculation de rouleaux, toujours en combinaison avec des blocs d'élastomère fretté. Les patins peuvent aussi être constitués par une couronne de modules à recirculation de rouleaux montés dans un anneau flottant ou montés sur des dispositifs à ressorts ou à vérins. Le palier bas 11 peut être constitué de galets montés radialement ou de boggies dans lesquels par exemple quatre roues sont montées de façon à former un véhicule. On pourrait aussi réaliser le palier 11 par des pneus montés radialement et, pour en optimiser l'efficacité, prévoir des pistes extérieures doublant l'efficacité radiale et réduisant la flèche.

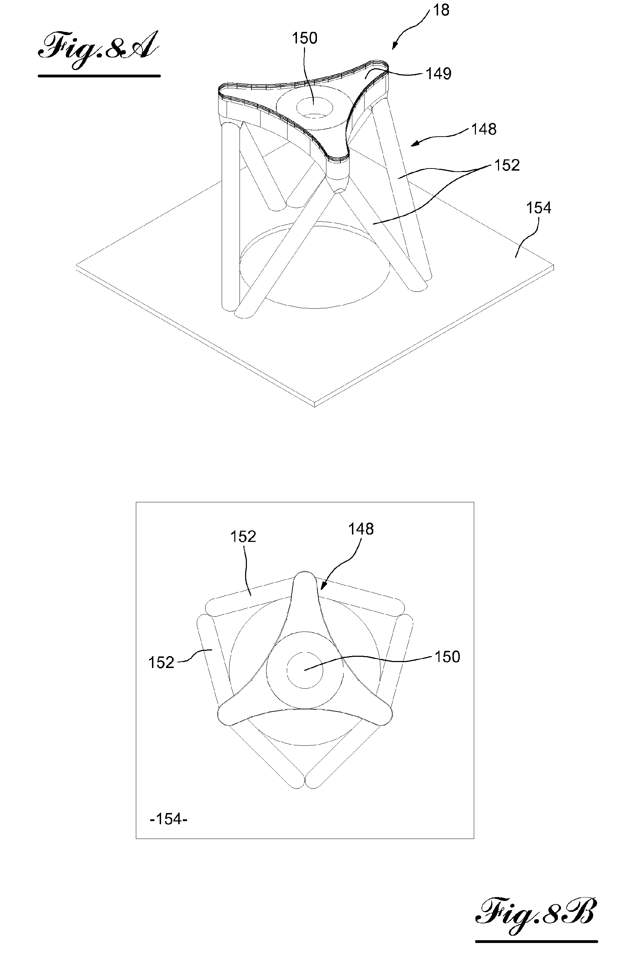

Les figures 7A, 7B et 8A et 8B présentent deux modes de réalisation avantageux de la structure de support 18 de l'installation selon l'invention.

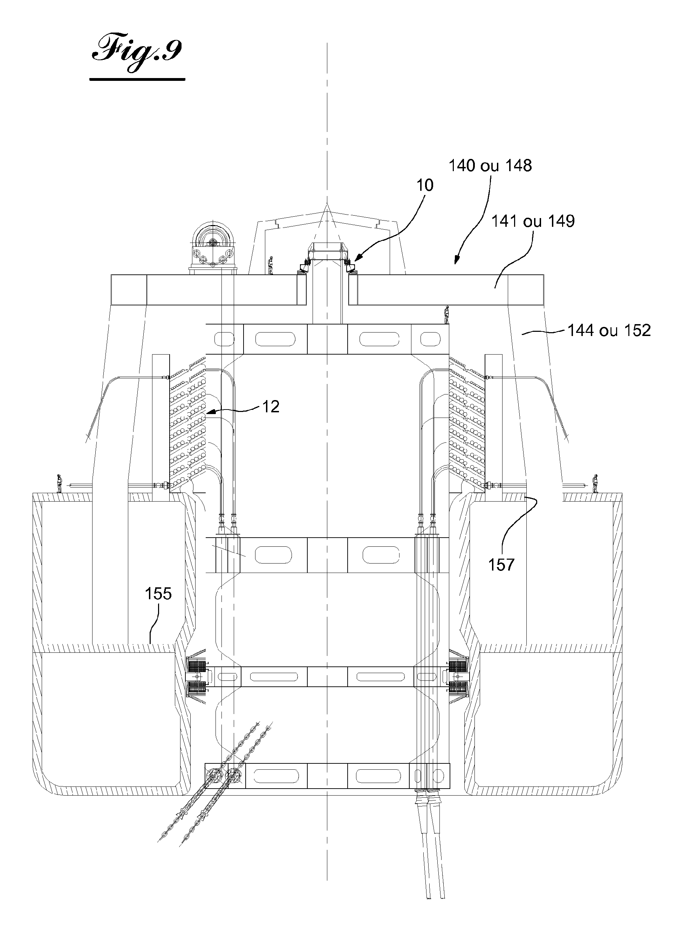

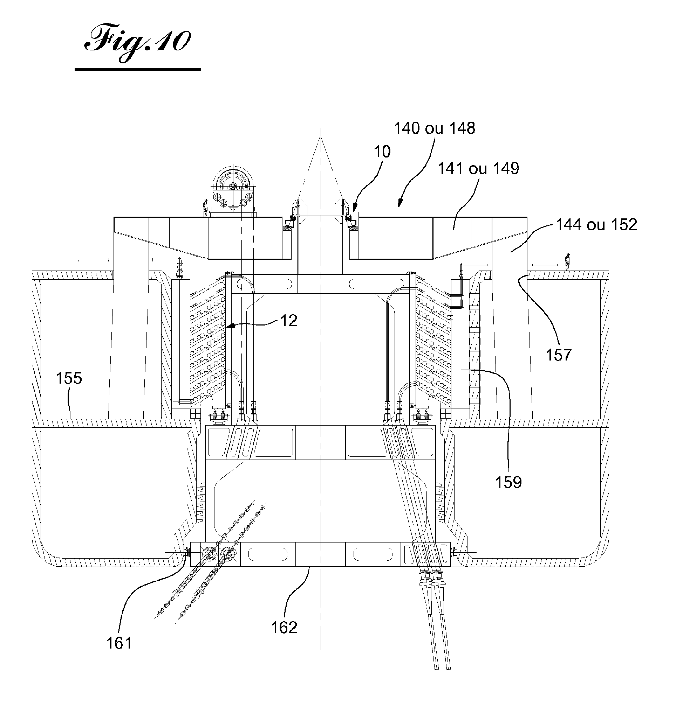

Les figures 7A et 7B montrent une structure porteuse en forme d'un tripode portant la référence 140. Ce tripode comporte un plateau supérieur horizontal 141 qui présente dans son centre une ouverture circulaire 142 permettant le passage de la tête de la tourelle et sur les bords duquel prend appui le palier haut 10, et trois pieds 144 inclinés en s'écartant légèrement de haut en bas les unes des autres et qui relient la plateforme à un pont 145 de l'unité flottante de stockage et de production, soit le pont supérieur, qui est soit un pont intermédiaire, avantageusement un pont situé à proximité du milieu de la hauteur de la coque du bateau, à la fibre neutre où les déformations sont minimales, comme l'illustrent les figures 9 et 10.

La structure tripode 140 dégage entre ses pieds et au dessus du pont de liaison 145 un volume disponible adapté au système rotatif de transfert de fluide, soit à plateaux superposés et conduites flexibles en spirale, comme le montrent par exemple la figure 2A et les figures 9 à 11, soit de type joint tournant multi passages à chambres annulaires toriques conformément par exemple à la figure 5 et la figure 11.

La structure tripode 140 présente, autant que nécessaire, une grande rigidité verticale grâce aux sections de pieds adaptées en conséquence et à la réduction des bras de levier de la structure supérieure par leur inclinaison appropriée. La structure tripode est ouverte, c'est-à-dire qu'elle ne ferme pas le volume cylindrique situé entre les pieds, et aide ainsi à la ventilation naturelle des équipements implantés dessous.

La structure tripode 140, adaptée à la solution avec le palier supérieur axial et radial implanté au-dessus du dispositif de transfert des fluides, présente l'avantage de transférer en trois points les charges verticale et horizontale sur le pont du navire. Le poinçonnement potentiel du pont est évité par exemple par l'utilisation de tôles de renforcement et de liaison verticale travaillant au cisaillement.

Grâce à ces conditions, les courbures du pont dues à la déformation de la coque du bateau génèrent le moins possible de contraintes dans les pieds. En ce qui concerne les ovalisations éventuelles au niveau du bord du trou 146 aménagées dans le pont pour le passage de la tourelle, à proximité duquel sont fondés les trois pieds 144, notamment si on s'éloigne de la fibre neutre, l'élévation des pieds eux-mêmes relativement à l'amplitude de la déformation radiale et les rigidités des liaisons pieds/pont et pieds/structure horizontale sont adaptées autant que nécessaire à l'objectif de réduction des contraintes dans la structure, par exemple par la conception structurelle ou par l'interposition d'éléments élastomères à l'emplacement 147.

La tenue aux efforts transversaux de cette structure peut être renforcée si nécessaire par l'adjonction de haubans (non représentés) ou de structures disposées latéralement aux trois pieds.

Les figures 8A et 8B présentent une autre version de réalisation de la structure 18 de support du palier supérieur de l'invention. Sur ces figures, cette structure est réalisée sous forme d'un hexapode 148.

La partie supérieure, en forme d'un plateau 149, avec en son centre l'ouverture 150 pour le passage de la tête de la tourelle, est connectée par six pieds 152 plus inclinés que dans le cas des figures 7A et 7B et arrangés deux à deux, tant au niveau du plateau supérieur 150 qu'au niveau du pont 154 de connexion à la coque de l'unité flottante. On constate que, comme dans le cas des figures 7A et 7B, le plateau supérieur 149 présente une forme générale triangulaire. Chaque angle est connecté aux extrémités rapprochées de deux pieds. Ces pieds s'étendent obliquement vers le pont, dans des directions opposées et viennent en appui sur le pont, chacun juste à côté de l'extrémité d'appui d'un pied connecté à l'angle adjacent du plateau.

Les points de ralliement des six pieds deux à deux en haut et en bas sont décalés, alternés dans une projection horizontale, notamment pour respecter la symétrie de la structure.

Ainsi, en haut, on préserve les avantages de la structure tripode des figures 7A et 7B, avec un nombre de connexions au niveau des pieds identiques en haut et en bas. En bas de l'hexapode, dans la zone de connexion au pont du bateau, on retrouve aussi les trois zones correspondant à la réunion des six pieds deux à deux.

Ainsi, les déflections verticales du pont dues à la courbure de la coque du bateau sont traduites essentiellement par un mouvement d'inclinaison du plateau supérieur, accepté par le plateau supérieur grâce à sa fonction de rotule et ce sans contrainte exagérée dans les pieds.

Concernant l'ovalisation, le comportement en trois pieds est aussi conservé dans l'ensemble, puisque deux pieds proches verront leur trajectoire radiale très similaire. Ici encore, la rigidité de liaison pieds/pont et pieds/structure horizontale est adaptée autant que nécessaire à l'objectif de réduction des contraintes dans la structure, par exemple par une conception structurelle localement adaptée ou par l'interposition d'éléments élastomères officiant en tant que pseudo-rotules.

Enfin, la structure en hexapode présente, par rapport à celle en tripode, une meilleure rigidité aux efforts horizontaux potentiellement transmis par la tête de la tourelle, car le basculement potentiel d'une structure triangulaire pointe en bas, réputée non déformable en elle-même, sous l'effet des efforts horizontaux qui lui sont perpendiculaires, sera contrecarré par l'effet de résistance des deux autres triangles opposés.

Les figures 9 et 10 illustrent en deux versions différentes, un autre mode de réalisation de l'invention qui comporte une structure de support 18 par exemple en forme de tripode conformément aux figures 7A, 7B ou en hexapode conformément aux figures 8A, 8B.

Dans l'installation selon la figure 9, les pieds 144 ou 152 de la structure de support sont connectés à la ligne neutre notée 155 de la coque de l'unité flottante, afin de réduire les déformations, notamment une ovalisation, subies au niveau des trois ou six pieds regroupés deux à deux, et donc de réduire les contraintes de flexion générées dans les pieds.

Comme indiqué plus haut, au dessus du plateau 141 ou 149 de la structure en tripode ou en hexapode, on trouve l'arrangement du palier 10 supérieur axial et radial présentant les fonctions de rotulage adéquates. Cette version correspond à l'installation de la figure 2A, avec un dispositif 12 de support et d'amenée des conduites 7, à plateformes coniques 15, 16 de stockage des conduites en spirale, mais dont les pieds 144 ou 152 traversent le pont supérieur en passant par des évidements appropriés 157 pour se connecter au pont 155, reconstitué à cette effet à proximité de la hauteur de la fibre neutre de la coque via des tôles verticales et horizontales.

La version représenté à la figure 10 se distingue de la version selon la figure 9 essentiellement par le fait que le dispositif 12 pourvu de plateformes de stockage en spirale des conduites est disposé dans une partie supérieure à plus grand diamètre 159 du puits de façon que les plateaux 141 ou 149 des structures de support en forme de tripode 140 ou hexapode 148 se trouvent à un niveau plus bas par rapport au pont supérieur, en comparaison à la figure 9.

En partie inférieure de la tourelle, sous le niveau de flottaison, on trouve en 161 un ensemble de blocs de type patins glissants, formant un palier radial segmenté. La disposition présentée est avantageuse car la reprise des efforts radiaux au plus prêt de la table d'ancrage 162 de la tourelle réduit les moments de basculement et les efforts radiaux supérieurs, tandis que le palier radial rotulant libère les contraintes de basculement de la tourelle dues aux déformations éventuelles de la coque, et enfin grâce au choix de fonder la structure de support à proximité immédiate de la ligne neutre de la coque, afin de réduire les contraintes dues à l'ovalisation dans les zones de connexion des pieds de la structure de support, aménagée par exemple en tripode (pieds 144) ou en hexapode (pieds 152).

## Revendications

1. Installation notamment pour la production et le traitement de fluides, tels que du pétrole ou du gaz, du type comprenant une unité flottante tel qu'un bateau, pourvue d'un système d'amarrage rotatif à point unique par l'intermédiaire d'une tourelle montée en pivot dans une ouverture en forme d'un puits traversant verticalement la coque de l'unité flottante, amarrée sur le fond marin et traversée par des conduites de transfert du fluide aux équipements de l'unité flottante, le système d'amarrage comprenant des dispositifs de guidage de la tourelle dans le puits, qui comportent des moyens de palier axial et de palier radial, la tourelle (2) comportant une partie supérieure qui comprend un dispositif de réception et de support tournant (12, 89, 100) des conduites (7, 90, 99) de transfert de fluide arrivantes, **caractérisé en ce qu'**un palier (10) d'un diamètre plus faible que le diamètre de ladite partie supérieure est interposé entre une partie de tête de cette partie supérieure de la tourelle (2) et une structure de support (18) connectée à la coque de l'unité flottante, le palier supérieur de la tourelle étant situé au-dessus dudit dispositif de réception et de support tournant des fluides.

2. Installation selon la revendication 1, **caractérisée en ce que** le palier (10) est interposé entre un organe avantageusement en forme d'un disque (30) de la partie de tête (23) et un plateau (25) de la structure de support (18) du bateau.

3. Installation selon l'une des revendications 1 ou 2, **caractérisée en ce qu'**elle comporte un palier radial (11) qui est disposé dans le puits (3), entre la surface périphérique cylindrique extérieure (17) de la tourelle et la paroi de délimitation du puits,

4. Installation selon l'une des revendications 1 à 3, **caractérisée en ce que** le palier axial (10) comporte deux couronnes de palier (27, 28), à savoir un palier principal interchangeable (27) et un palier temporaire (28) adapté pour assurer le fonctionnement de l'installation lorsque le palier principal (27) est hors usage.

5. Installation selon la revendication 4, **caractérisée en ce que** les deux paliers (27, 28) sont espacés radialement, le palier remplaçable (27) étant situé radialement à l'extérieur.

6. Installation selon la revendication 4, **caractérisée en ce que** les deux paliers principal (27) et temporaire (28) sont superposés dans l'axe de la tourelle, le palier principal (27) étant avantageusement situé plus haut.

7. Installation selon l'une des revendications 1 à 6, **caractérisée en ce que** le palier supérieur (10) est un palier en forme d'une rotule glissante permettant le mouvement de basculement latéral de la tourelle par rapport à son axe vertical.

8. Installation selon l'une des revendications 1 à 7, **caractérisée en ce que** le palier supérieur (10) est un palier glissant permettant le mouvement de basculement latéral de la tourelle par rapport à son axe vertical au moyen de dispositifs se cisaillant.

9. Installation selon la revendication 8 ou 7, **caractérisée en ce que** le palier est en forme d'une couronne monobloc assortie de vérins de levage pour la mise hors service de ce roulement, le cas échéant, pour un remplacement par une autre couronne.

10. Installation selon l'une des revendications 1 à 9, **caractérisée en ce que** le palier supérieur (10) comporte une couronne de modules (52) à recirculation de rouleaux coniques en appuis sur un disque ou un cône constituant un palier axial et une couronne de modules (53) à recirculation de rouleau cylindriques en appui sur une piste cylindrique constituant un palier radial, les deux couronnes étant en appui sur un anneau (57) formant rotule en prenant appui par des patins élastomériques (59) sur la structure de support (25, 18) du bateau.

11. Installation selon l'une des revendications 1 à 10, **caractérisée en ce que** le palier supérieur (10) comporte une couronne de modules à recirculation de rouleaux coniques sur une piste conique, qui prend appui sur la structure de support (25, 18) du bateau par des éléments avantageusement du type patins élastomériques (64).

12. Installation selon l'une des revendications 1 à 10, **caractérisée en ce que** le palier supérieur (10) est formé par une pluralité de couronnes superposées dans la direction de l'axe du puits formées par des éléments se déplaçant sur des surfaces coniques dont les lignes orthogonales aux surfaces se recoupent dans un point sur l'axe du puits, au-dessus de la tourelle.

13. Installation selon la revendication 13, **caractérisée en ce que** les couronnes sont formées par des modules à recirculation de rouleau.

14. Installation selon la revendication 13, **caractérisée en ce que** les couronnes sont formées par des agencements de roues élastiquement déformables telles que de pneus ou rouleaux à bandage élastiquement déformables ou pneumatiques.

15. Installation selon l'une des revendications précédentes, **caractérisée en ce que** le dispositif de réception et de support des conduites (7) de transfert de fluide arrivantes comporte des plateaux annulaires (14), comprenant chacun un élément de plateau (15) solidaire de la tourelle et un élément de plateau (16) solidaire de la structure de support (18) du bateau, sur lesquels sont posées, avantageusement en forme de spirales, les conduites de transfert arrivantes et **en ce que** le palier supérieur est disposé au-dessus des plateaux et des conduites de sortie vers l'équipement du bateau.

16. Installation selon l'une des revendications 1 à 15, **caractérisée en ce que** le dispositif de réception et de support des conduites de transfert (7) arrivantes comporte un dispositif de joints tournants collecteurs (89) auxquels sont connectées les conduites de transfert arrivantes et desquelles partent des conduites de sortie (90) vers l'équipement du bateau, le palier (10) de diamètre réduit étant disposé au-dessus du dispositif de joint tournant et des conduites de sortie.

17. Installation selon l'une des revendications 1 à 15, **caractérisée en ce que** le dispositif de réception et de support des conduites de transfert arrivantes (7) comporte un dispositif de vannes (98) adaptées pour réduire le nombre de conduites de transfert (7, 97) et un dispositif de joint rotatif pourvu de deux parties coaxiales, l'une (100) étant solidaire de la tourelle (2) et recevant les conduites de sortie (99) du dispositif de vanne (98) d'un nombre réduit par rapport au nombre de conduites arrivantes (97) et une partie (102) solidaire de la structure de support du bateau et à laquelle sont connectées les conduites de sortie (106) vers l'équipement du bateau et **en ce que** le palier supérieur (10) de diamètre réduit est disposé coaxialement autour de la partie de joint rotatif (100) solidaire de la tourelle (3) en dessous des connexions des conduites de sortie (106).

18. Installation selon l'une des revendications 2 à 17, **caractérisée en ce que** le palier radial (11) comporte des éléments de rotation, tels que des roues élastiquement déformables dont les axes s'étendent parallèlement à l'axe du puits, des éléments à recirculation de rouleaux ou analogue.

19. Installation selon la revendication 18, **caractérisée en ce que** les éléments de rotation en forme de roues (66) sont montés sur des poteaux de support (67) solidaires de la face interne du puits (3) et en contact de roulement avec la surface extérieure (17) de la tourelle (2), et **en ce que** la tourelle (2) comporte une deuxième piste de rouleaux (69) qui est coaxiale à la surface extérieure de la tourelle.

20. Installation selon l'une des revendications 2 à 19, **caractérisée en ce que** le diamètre du puits est réduit au-dessus de sa partie de réception des conduites de transfert (7), que la partie de la tourelle, qui est engagée dans la partie de puits de diamètre réduit présente un diamètre réduit en conséquence et **en ce que** le palier radial (11) est d'un diamètre réduit et interposé, avantageusement en bas, entre les parties de diamètre réduit du puits et de la tourelle.

21. Installation selon l'une des revendications 1 à 18, **caractérisée en ce que** la partie du puits située au-dessus de sa partie de réception des conduites de transfert (7) présente un diamètre réduit, que la partie de la tourelle, qui est engagée dans la partie de puits de diamètre réduit, présente un diamètre réduit en conséquence et **en ce que** le palier radial (11) est disposé entre les parties de diamètre réduit du puits et de la tourelle, avantageusement en bas de celles-ci et **en ce que** le palier (11) est réalisé sous forme d'un palier glissant et, le cas échéant, non rotulant.

22. Installation selon l'une des revendications 1 à 21, **caractérisée en ce que** la structure de support est à descente de charge verticale à trois pieds, ou à six pieds arrangés deux à deux en décalé, pour accommoder les déformations du pont du bateau sur laquelle elle est attachée.

23. Installation selon la revendication 22, **caractérisée en ce que** la structure de support est à descente de charge verticale passant à travers le pont supérieur du bateau sans y être attaché, pour se fonder à proximité de la médiane de la hauteur de la coque du bateau, où les déformations sont minimales.

## Patentansprüche

1. Installation, insbesondere für die Produktion und die Verarbeitung von Fluiden wie Erdöl oder Gas, der Bauart, die eine schwimmende Einheit wie ein Schiff umfasst, das mit einem rotierenden Einpunkt-Andocksystem mittels eines schwenkbar in einer Öffnung in Form eines den Rumpf der schwimmenden Einheit vertikal durchquerenden Schachts montierten Turms ausgestattet ist, der auf dem Meeresgrund angedockt und von Übertragungsleitungen des Fluids an die Ausrüstungen der schwimmenden Einheit durchquert ist, wobei das Andocksystem Führungsvorrichtungen des Turms in dem Schacht umfasst, die ein axiales und ein radiales Lagermittel aufweisen, wobei der Turm (2) einen oberen Teil aufweist, der eine drehende Empfangs- und Stützvorrichtung (12, 89, 100) der ankommenden Fluidübertragungsleitungen (7, 90, 99) umfasst, **dadurch gekennzeichnet, dass** ein Lager (10) mit einem kleineren Durchmesser als der Durchmesser des oberen Teils zwischen einem Kopfteil dieses oberen Teils des Turms (2) und einer mit dem Rumpf der schwimmenden Einheit gekoppelten Stützstruktur (18) angeordnet ist, wobei sich das obere Lager des Turms über der drehenden Fluid-Empfangs- und Stützvorrichtung befindet.

2. Installation nach Anspruch 1, **dadurch gekennzeichnet, dass** das Lager (10) zwischen einem in vorteilhafter Weise scheibenförmigen Organ (30) des Kopfteils (23) und einem Plateau (25) der Stützstruktur (18) des Schiffs angeordnet ist.

3. Installation nach einem der Ansprüche 1 oder 2, **dadurch gekennzeichnet, dass** sie ein radiales Lager (11) aufweist, das in dem Schacht (3) zwischen der äußeren zylindrischen Umfangsfläche (17) des Turms und der Begrenzungswand des Schachts angeordnet ist.

4. Installation nach einem der Ansprüche 1 bis 3, **dadurch gekennzeichnet, dass** das axiale Lager (10) zwei Lagerkränze (27, 28) aufweist, nämlich ein austauschbares Hauptlager (27) und ein temporäres Lager (28), das ausgebildet ist, um die Funktion der Installation zu sichern, wenn das Hauptlager (27) außer Betrieb ist.

5. Installation nach Anspruch 4, **dadurch gekennzeichnet, dass** die zwei Lager (27, 28) radial beabstandet sind, wobei sich das ersetzbare Lager (27) radial außen befindet.

6. Installation nach Anspruch 4, **dadurch gekennzeichnet, dass** die zwei Lager, das Haupt- (27) und das temporäre (28) Lager, in der Achse des Turms übereinanderstehen, wobei sich das Hauptlager (27) in vorteilhafter Weise höher befindet.

7. Installation nach einem der Ansprüche 1 bis 6, **dadurch gekennzeichnet, dass** das obere Lager (10) ein Lager in Form eines Gleitkugelgelenks ist, das die seitliche Kippbewegung des Turms im Verhältnis zu seiner vertikalen Achse erlaubt.

8. Installation nach einem der Ansprüche 1 bis 7, **dadurch gekennzeichnet, dass** das obere Lager (10) ein Gleitlager ist, das die seitliche Kippbewegung des Turms im Verhältnis zu seiner vertikalen Achsen mittels sich überschneidender Vorrichtungen erlaubt.

9. Installation nach Anspruch 8 oder 7, **dadurch gekennzeichnet, dass** das Lager in Form eines Einblockkranzes mit Hubzylindern für die Außerdienststellung dieses Lagers gegebenenfalls für einen Ersatz durch einen anderen Kranz ist.

10. Installation nach einem der Ansprüche 1 bis 9, **dadurch gekennzeichnet, dass** das obere Lager (10) einen Kranz mit Umlaufmodulen (52) mit konischen Rollen in Abstützung auf einer Scheibe oder einem Konus, der ein axiales Lager bildet, und einen Kranz mit Umlaufmodulen (53) mit zylindrischen Rollen in Abstützung auf einer zylindrischen Piste, der ein radiales Lager bildet, aufweist, wobei sich die zwei Kränze auf einem ein Kugelgelenk bildenden Ring (57) abstützen, indem sie sich mittels Elastomerfüßen (59) auf der Stützstruktur (25, 18) des Schiffs abstützen.

11. Installation nach einem der Ansprüche 1 bis 10, **dadurch gekennzeichnet, dass** das obere Lager (10) einen Kranz mit Umlaufmodulen mit konischen Rollen auf einer konischen Piste aufweist, der sich auf der Stützstruktur (25, 18) des Schiffs mittels Elementen in vorteilhafter Weise vom Typ Elastomerfüße (64) abstützt.

12. Installation nach einem der Ansprüche 1 bis 10, **dadurch gekennzeichnet, dass** das obere Lager (10) von einer Vielzahl in der Richtung der Achse des Schachts übereinanderstehender Kränze gebildet ist, die von Elementen gebildet sind, die sich auf konischen Flächen verlagern, deren orthogonale Linien auf den Flächen sich in einem Punkt auf der Achse des Schachts über dem Turm schneiden.

13. Installation nach Anspruch 13, **dadurch gekennzeichnet, dass** die Kränze von Rollenumlaufmodulen gebildet sind.

14. Installation nach Anspruch 13, **dadurch gekennzeichnet, dass** die Kränze von Anordnungen elastisch verformbarer Räder wie Reifen oder Rollen mit elastisch verformbarem Mantel oder Luftreifen gebildet sind.

15. Installation nach einem der vorangehenden Ansprüche, **dadurch gekennzeichnet, dass** die Empfangs- und Stützvorrichtung der ankommenden Fluidübertragungsleitungen (7) ringförmige Plateaus (14) aufweist, die jeweils ein mit dem Turm fest verbundenes Plateauelement (15) und ein mit der Stützstruktur (18) des Schiffs fest verbundenes Plateauelement (16) umfassen, auf denen in vorteilhafter Weise in Spiralform die ankommenden Übertragungsleitungen abgelegt sind, und dass das obere Lager über den Plateaus und den Ausgangsleitungen zu der Ausrüstung des Schiffs angeordnet ist.

16. Installation nach einem der Ansprüche 1 bis 15, **dadurch gekennzeichnet, dass** die Empfangs- und Stützvorrichtung der ankommenden Übertragungsleitungen (7) eine Sammlerdrehverbindungsvorrichtung (89) aufweist, an die die ankommenden Übertragungsleitungen angeschlossen sind und von denen die Ausgangsleitungen (90) zur Ausrüstung des Schiffs abgehen, wobei das Lager (10) mit dem reduzierten Durchmesser über der Drehverbindungsvorrichtung und den Ausgangsleitungen angeordnet ist.

17. Installation nach einem der Ansprüche 1 bis 15, **dadurch gekennzeichnet, dass** die Empfangs- und Stützvorrichtung der ankommenden Übertragungsleitungen (7) eine Schiebervorrichtung (98) aufweist, die ausgebildet sind, um die Anzahl der Übertragungsleitungen (7, 97) zu reduzieren, und eine Drehverbindungsvorrichtung, die aus zwei koaxialen Teilen besteht, wobei ein Teil (100) mit dem Turm fest verbunden ist und die Ausgangsleitungen (99) der Schiebervorrichtung (98) in einer im Verhältnis zur Anzahl der ankommenden Leitungen (97) reduzierten Anzahl empfängt, und ein Teil (102) mit der Stützstruktur des Schiffs fest verbunden ist und an das die Ausgangsleitungen (106) zur Ausrüstung des Schiffs angeschlossen sind und dass das obere Lager (10) mit reduziertem Durchmesser koaxial um den Drehverbindungsteil (100) angeordnet ist, der mit dem Turm (3) fest verbunden ist, unterhalb der Anschlüsse der Ausgangsleitungen (106).

18. Installation nach einem der Ansprüche 2 bis 17, **dadurch gekennzeichnet, dass** das radiale Lager (11) Rotationselemente wie elastisch verformbare Räder, deren Achsen sich parallel zur Achse des Schachts erstrecken, Rollenumlaufelemente oder ähnliches aufweist.

19. Installation nach Anspruch 18, **dadurch gekennzeichnet, dass** die Rotationselemente in Räderform (66) auf mit der Innenseite des Schachts (3) fest verbundenen Stützpfosten (67) montiert und im rollenden Kontakt mit der Außenseite (17) des Turms (2) sind, und dass der Turm (2) eine zweite Rollenpiste (69) aufweist, die zur Außenfläche des Turms koaxial ist.

20. Installation nach einem der Ansprüche 2 bis 19, **dadurch gekennzeichnet, dass** der Durchmesser des Schachts über seinem Empfangsteil der Übertragungsleitungen (7) reduziert ist, dass der Teil des Turms, der in den Schachtteil mit reduziertem Durchmesser eingreift, einen entsprechend reduzierten Durchmesser aufweist und dass das radiale Lager (11) einen reduzierten Durchmesser hat und in vorteilhafter Weise unten zwischen den Teilen mit reduziertem Durchmesser des Schachts und des Turms angeordnet ist.

21. Installation nach einem der Ansprüche 1 bis 18, **dadurch gekennzeichnet, dass** der Schachtteil, der sich über seinem Empfangsteil der Übertragungsleitungen (7) befindet, einen reduzierten Durchmesser aufweist, dass der Turmteil, der in den Schachtteil mit reduzierten Durchmesser eingreift, einen entsprechend reduzierten Durchmesser aufweist und dass das radiale Lager (11) zwischen den Teilen mit reduziertem Durchmesser des Schachts und des Turms angeordnet ist, in vorteilhafter Weise unterhalb derselben, und dass das Lager (11) in Form eines Gleitlagers und gegebenenfalls nicht schwenkbar ausgeführt ist.

22. Installation nach einem der Ansprüche 1 bis 21, **dadurch gekennzeichnet, dass** die Stützstruktur mit dreibeinigem oder sechsbeinigem paarweise versetzten vertikalen Lastabfall ist, um die Verformungen der Brücke des Schiffs anzupassen, an der sie angedockt ist.

23. Installation nach Anspruch 22, **dadurch gekennzeichnet, dass** die Stützstruktur mit vertikalen Lastabfall ist, die durch die obere Brücke des Schiffs verläuft, ohne dort befestigt zu sein, um sich in der Nähe der Mittellinie der Höhe des Rumpfs des Schiffs zu gründen, wo die Verformungen minimal sind.

## Claims

1. An installation, particularly for the production and treatment of fluids, such as oil or gas, of the type comprising a floating vessel such as a boat, provided with a single-point rotary mooring system by means of a tower mounted pivotably in an opening in the shape of a well crossing vertically through the hull of the floating vessel, moored on the sea bottom and crossed through by transfer pipes for transferring the fluid to the equipment of the floating vessel, the mooring system comprising devices for guiding the tower in the well, which include axial bearing and radial bearing means, the tower (2) including an upper part that comprises a rotary receiving and support device (12, 89, 100) for the incoming fluid transfer pipes (7, 90, 99), **characterized in that** a bearing (10) with a diameter smaller than the diameter of said upper part is inserted between a head part of that upper part of the tower (2) and a support structure (18) connected to the hull of the floating vessel, the upper bearing of the tower being situated above said rotary receiving and support device for the fluids.

2. The installation according to claim 1, **characterized in that** the bearing (10) is inserted between a member advantageously in the form of a disc (30) of the head part (23) and a plate (25) of the support structure (18) of the boat.

3. The installation according to one of claims 1 or 2, **characterized in that** it includes a radial bearing (11) that is positioned in the well (3), between the outer cylindrical peripheral surface (17) of the tower and the wall delimiting the well.

4. The installation according to one of claims 1 to 3, **characterized in that** the axial bearing (10) includes two bearing rings (27, 28), i.e., an interchangeable main bearing (27) and a temporary bearing (28) suitable for seeing to the operation of the installation when the main bearing (27) is not in use.

5. The installation according to claim 4, **characterized in that** the two bearings (27, 28) are radially spaced apart, the replaceable bearing (27) being situated radially to the outside.

6. The installation according to claim 4, **characterized in that** the two main (27) and temporary (28) bearings are superimposed in the axis of the tower, the main bearing (27) advantageously being situated higher.

7. The installation according to one of claims 1 and 6, **characterized in that** the upper bearing (10) is a bearing in the form of a sliding knuckle joint allowing the lateral tilting movement of the tower relative to its vertical axis.

8. The installation according to one of claims 1 to 7, **characterized in that** the upper bearing (10) is a sliding knuckle joint allowing the lateral tilting movement of the tower relative to its vertical axis by means of shearing devices.

9. The installation according to claim 8 or 7, **characterized in that** the bearing is in the form of a single-piece spring accompanied by lifting jacks to cease the operation of that rolling bearing, if applicable, to replace it with another ring.

10. The installation according to one of claims 1 to 9, **characterized in that** the upper bearing (10) includes a ring of modules (52) with conical roller recirculation bearing on a disc or a cone making up an axial bearing and a ring of modules (53) with cylindrical roller recirculation bearing on a cylindrical track making up a radial bearing, the two crowns bearing on a ring (57) forming a knuckle joint while bearing by elastomeric tabs (59) on the support structure (25, 18) of the boat.

11. The installation according to one of claims 1 to 10, **characterized in that** the upper bearing (10) includes a crown of conical roller recirculation modules on a conical track, which bears on the support structure (25, 18) of the boat by elements advantageously of the elastomeric pad type (64).

12. The installation according to one of claims 1 to 10, **characterized in that** the upper bearing (10) is formed by a plurality of crowns superimposed in the direction of the axis of the well formed by elements moving on conical surfaces whereof the lines orthogonal to the surface intersect at a point on the axis of the well, above the tower.

13. The installation according to claim 13, **characterized in that** the crowns are formed by roller recirculation modules.

14. The installation according to claim 13, **characterized in that** the crowns are formed by arrangements of elastically deformable wheels such as elastically deformable or pneumatic tires or tire rollers.

15. The installation according to one of the preceding claims, **characterized in that** the receiving and support device for the pipes (7) for transferring incoming fluids includes annular plates (14), each comprising a plate element (15) secured to the tower and a plate element (16) secured to the support structure (18) of the boat, on which the incoming transfer pipes are placed, advantageously in the form of spirals, and **in that** the upper bearing is positioned above the plates and the outlet pipes toward the equipment of the boat.

16. The installation according to one of claims 1 to 15, **characterized in that** the receiving and support device for the incoming transfer pipes (7) includes a rotary collector joint device (89) to which the incoming transfer pipes are connected and from which the outgoing pipes (90) leave toward the equipment of the boat, the bearing (10) with a reduced diameter being positioned above the rotary joint device and the outgoing pipes.

17. The installation according to one of claims 1 to 15, **characterized in that** the receiving and support device for the incoming transfer pipes (7) includes a valve device (98) suitable for reducing the number of transfer pipes (7, 97) and a rotary joint device provided with two coaxial parts, one (100) being secured to the tower (2) and receiving the outgoing pipes (99) of the valve device (98) in a reduced number relative to the number of incoming pipes (97), and a part (102) secured to the support structure of the boat and to which the outgoing pipes (106) toward the equipment of the boat are connected, and **in that** the upper bearing (10) with a reduced diameter is positioned coaxially around the rotary joint part (100) secured to the tower (3) below the connections of the outgoing pipes (106).

18. The installation according to one of claims 2 to 17, **characterized in that** the radial bearing (11) includes rotating elements, such as elastically deformable wheels whereof the axes extend parallel to the axis of the well, roller recirculation elements or similar elements.

19. The installation according to claim 18, **characterized in that** the rotating elements in the form of wheels (66) are mounted on support posts (67) secured to the inner face of the well (3) and in rolling contact with the upper surface (17) of the tower (2), and **in that** the tower (2) includes a second roller track (69) that is coaxial to the outer surface of the tower.

20. The installation according to one of claims 2 to 19, **characterized in that** the diameter of the well is reduced above its receiving part for the transfer pipes (7), the part of the tower that is engaged in the well part with a reduced diameter has a reduced diameter as a result, and **in that** the radial bearing (11) has a reduced diameter and is inserted, advantageously at the bottom, between the parts with a reduced diameter of the well and the tower.

21. The installation according to one of claims 1 to 18, **characterized in that** the part of the well situated above its part receiving the transfer pipes (7) has reduced diameter, the part of the tower that is engaged in the well part with the reduced diameter has a reduced diameter as a result, and **in that** the radial bearing (11) is positioned between the parts with reduced diameter of the well and the tower, advantageously at the bottom thereof, and **in that** the bearing (11) is made in the form of a sliding and, if applicable, not rolling bearing.

22. The installation according to one of claims 1 to 21, **characterized in that** the support structure has three-foot vertical load lowering, or six feet arranged in offset pairs, to accommodate the deformations of the bridge of the boat on which it is attached.

23. The installation according to claim 22, **characterized in that** the support structure has vertical load lowering passing through the upper bridge of the deck without being attached thereto, to be founded near the middle of the height of the hull of the boat, where the deformations are minimal.
